# EUROPEAN PATENT APPLICATION

(11) **EP 4 712 385 A1**
(43) Date of publication of application: **18.03.2026**
(21) Application number: 23935970.6
(22) Date of filing: 06.05.2023
(51) Int. Cl.: H04L 5/00, H04W 72/231, H04W 72/232

(54) **TRANSMISSION CONFIGURATION INDICATION STATE DETERMINATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/092623
(87) International publication number: WO 2024/229641

(57) **Abstract**

The present disclosure relates to a transmission configuration indication (TCI) state determination method and apparatus, a device, and a storage medium. The method comprises: receiving first information, the first information being used for determining N sets of unified TCI states, and N being a positive integer; receiving second information, the second information being used for determining that a physical downlink shared channel (PDSCH) and/or a demodulation reference signal (DMRS) corresponding to the PDSCH are/is configured to use a specified scheme for communication; and under a designated condition, determining the PDSCH and/or the DMRS corresponding to the PDSCH, wherein the corresponding TCI state belongs to at least one set of unified TCI states among the N sets of unified TCI states. Under the condition that the specified scheme is configured for communication, it is determined that at least one set of TCI states among the indicated multiple sets of TCI states is used for communication. The flexibility of data transmission based on sets of unified TCI states is improved, thereby improving the performance of data transmission and/or reception.

## Description

### TECHNICAL FIELD

The present disclosure relates to the field of communication technologies, and in particular to a method, apparatus, device, and storage medium for determining a transmission configuration indication (TCI) state.

### BACKGROUND

In new radio (NR) networks, especially in frequency range 2, beam-based transmission and reception are required to ensure coverage because high-frequency channels attenuate rapidly.

Typically, the physical downlink control channel (PDCCH) and/or the demodulation reference signal (DMRS) for PDCCH, and the physical uplink control channel (PUCCH) and/or the DMRS for PUCCH activate their corresponding beams via the medium access control element (MAC CE). The physical downlink shared channel (PDSCH) and/or the DMRS for PDSCH, and the physical uplink shared channel (PUSCH) and/or the DMRS for PUSCH indicate their corresponding beams via downlink control information (DCI) signaling. Beams can be indicated by TCI state or spatial-relation-info.

In some technologies, in order to reduce signaling overhead, it is proposed to adopt a unified TCI state. The unified TCI state can simultaneously indicate the TCI state used by a terminal for receiving the PDCCH and/or the DMRS for PDCCH, the PDSCH and/or the DMRS for PDSCH, and/or the TCI state used by the terminal for transmitting the PUCCH and/or the DMRS for PUCCH, the PUSCH and/or the DMRS for PUSCH.

### SUMMARY

To overcome the problems existing in the related art, the present disclosure provides a TCI state determination method, apparatus, device and storage medium.

According to a first aspect of an embodiment of the present disclosure, a TCI state determination method is provided, which is executed by a terminal and includes: receiving first information, where the first information is used to determine N sets of unified TCI states, where N is a positive integer; receiving second information, where the second information is used to determine that the PDSCH and/or the DMRS corresponding to the PDSCH are configured to communicate using a designated scheme; and determining a TCI state corresponding to the PDSCH and/or the DMRS corresponding to the PDSCH as at least one set of unified TCI states of the N sets of unified TCI states.

In some embodiments, the TCI state corresponding to the PDSCH and/or the DMRS corresponding to the PDSCH is determined as the at least one set of unified TCI states of the N sets of unified TCI states when at least one of the following conditions is met: the PDSCH and/or the DMRS corresponding to the PDSCH are scheduled by DCI (format) 1_0; the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

In some embodiments, the method further includes: receiving third information, where the third information is used to configure a channel measurement resource (CMR); the determining the TCI state corresponding to the PDSCH and/or the DMRS corresponding to the PDSCH as at least one set of unified TCI states of the N sets of unified TCI states includes: in a case where the CMR includes a non-zero power channel state information reference signal (NZP CSI-RS) resource, determining a set of unified TCI states among the N sets of unified TCI states as the TCI state corresponding to the PDSCH and/or the DMRS corresponding to the PDSCH; in a case where the CMR includes multiple NZP CSI-RS resources and one NZP CSI-RS resource of the multiple NZP CSI-RS resources is determined to be selected, determining a set of unified TCI states among the N sets of unified TCI states as the TCI state corresponding to the PDSCH and/or the DMRS corresponding to the PDSCH; in a case where the CMR includes multiple NZP CSI-RS resources and at least two NZP CSI-RS resources of the multiple NZP CSI-RS resources is determined to be selected, determining at least two sets of unified TCI states among the N sets of unified TCI states as the TCI state corresponding to the PDSCH and/or the DMRS corresponding to the PDSCH; in a case where the CMR includes multiple NZP CSI-RS resources and a network device configures the terminal not to perform NZP resource selection, determining at least two sets of unified TCI states among the N sets of unified TCI states as the TCI state corresponding to the PDSCH and/or the DMRS corresponding to the PDSCH.

In some embodiments, determining the TCI state corresponding to the PDSCH and/or the DMRS corresponding to the PDSCH as at least one set of unified TCI states of the N sets of unified TCI states includes: in a case where the terminal does not support dynamic switching between the designated scheme and a single transmission and reception point (S-TRP) communication scheme, determining at least two sets of unified TCI states among the N sets of unified TCI states as the TCI state corresponding to the PDSCH and/or the DMRS corresponding to the PDSCH, where the designated scheme adopts M-TRP communication; or in a case where the terminal supports dynamic switching between the designated scheme and the S-TRP communication scheme, determining one set of unified TCI states from the N sets of unified TCI states as the TCI state corresponding to the PDSCH and/or the DMRS corresponding to the PDSCH.

In some embodiments, the method further includes: receiving third information, where the third information is used to configure a CMR; in a case that the terminal does not support dynamic switching between the designated scheme and the S-TRP communication scheme, a number of NZP CSI-RS resources selected by the terminal from the multiple NZP CSI-RS resources is greater than 1, and the CMR includes the multiple NZP CSI-RS resources, where the designated scheme adopts M-TRP communication.

In some embodiments, the method further includes: sending fourth information, where the fourth information is used to indicate whether the terminal supports an ability to dynamically switch between the designated scheme and the S-TRP communication scheme.

In some embodiments, the designated scheme is coherent joint transmission (CJT).

In some embodiments, the CJT includes at least one of the following: one CMR configured by a network device includes L NZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

In some embodiments, the first information is carried by a MAC CE, and the N sets of unified TCI states indicated by the first MAC CE correspond to a code point in a TCI state indication field carried in the DCI.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

In some embodiments, the second information is carried via radio resource control (RRC) signaling; and/or the second information is carried by a third MAC CE.

In some embodiments, the unified TCI state includes at least one of the following: a joint TCI state; or at least one of a downlink TCI state and an uplink TCI state.

In some embodiments, the method further includes: sending fifth information, where the fifth information is used to indicate the NZP CSI-RS resource selected by the terminal.

According to a second aspect of an embodiment of the present disclosure, a method for determining a TCI state is provided, where the method is performed by a network device and includes: sending first information, where the first information is used to determine N sets of unified TCI states, where N is a positive integer; and sending second information, where the second information is used to determine whether a PDSCH and/or a DMRS corresponding to the PDSCH is configured to adopt a designated scheme for communication.

In some embodiments, the PDSCH and/or the DMRS corresponding to the PDSCH are scheduled by DCI format 1_0; or the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

In some embodiments, the method further includes: sending third information, where the third information is used to configure a channel measurement resource (CMR); the CMR includes a non-zero power channel state information reference signal (NZP CSI-RS) resource; the CMR includes multiple NZP CSI-RS resources, and the network device does not configure the terminal not to perform NZP CSI-RS resource selection; the CMR includes multiple NZP CSI-RS resources, and the network device configures the terminal not to perform NZP CSI-RS resource selection.

In some embodiments, the method further includes: receiving fourth information, where the fourth information is used to indicate whether a terminal supports an ability to dynamically switch between a designated scheme and a S-TRP communication scheme.

In some embodiments, the designated scheme is coherent joint transmission (CJT).

In some embodiments, the CJT includes at least one of the following: one CMR configured by the network device includes L NZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

In some embodiments, the first information is carried by a first MAC CE, and the N sets of unified TCI states indicated by the first MAC CE correspond to a code point in a TCI state indication field carried in the DCI.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

In some embodiments, the second information is carried via radio resource control (RRC) signaling; and/or the second information is carried by a third MAC CE.

In some embodiments, the unified TCI state includes at least one of the following: a joint TCI state; or at least one of a downlink TCI state and an uplink TCI state.

In some embodiments, the method further includes: receiving fifth information, where the fifth information is used to indicate the NZP CSI-RS resource selected by a terminal.

According to a third aspect of an embodiment of the present disclosure, an apparatus for determining a TCI state is provided, which includes: a receiving module, configured to receive first information, where the first information is used to determine N sets of unified TCI states, where N is a positive integer; where the receiving module is further configured to receive second information, where the second information is used to determine whether a PDSCH and/or a DMRS corresponding to the PDSCH is configured to adopt a designated scheme for communication; and a processing module, configured to determine a TCI state corresponding to the PDSCH and/or the DMRS corresponding to the PDSCH as at least one set of unified TCI states of the N sets of unified TCI states.

In some embodiments, the TCI state corresponding to the PDSCH and/or the DMRS corresponding to the PDSCH is determined as the at least one set of unified TCI states of the N sets of unified TCI states when at least one of the following conditions is met: the PDSCH and/or the DMRS corresponding to the PDSCH are scheduled by DCI format 1_0; the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

In some embodiments, the receiving module is further configure to receive third information, where the third information is used to configure a CMR; and the processing module is further configured to: in a case where the CMR includes a non-zero power channel state information reference signal (NZP CSI-RS) resource, determine a set of unified TCI states among the N sets of unified TCI states as the TCI state corresponding to the PDSCH and/or the DMRS corresponding to the PDSCH; in a case where the CMR includes multiple NZP CSI-RS resources and one NZP CSI-RS resource of the multiple NZP CSI-RS resources is determined to be selected, determine a set of unified TCI states among the N sets of unified TCI states as the TCI state corresponding to the PDSCH and/or the DMRS corresponding to the PDSCH; in a case where the CMR includes multiple NZP CSI-RS resources and at least two NZP CSI-RS resources of the multiple NZP CSI-RS resources is determined to be selected, determine at least two sets of unified TCI states among the N sets of unified TCI states as the TCI state corresponding to the PDSCH and/or the DMRS corresponding to the PDSCH; in a case where the CMR includes multiple NZP CSI-RS resources and a network device configures the terminal not to perform NZP resource selection, determine at least two sets of unified TCI states among the N sets of unified TCI states as the TCI state corresponding to the PDSCH and/or the DMRS corresponding to the PDSCH.

In some embodiments, the processing module is further configured to: in a case where the terminal does not support dynamic switching between the designated scheme and a S-TRP communication scheme, determine at least two sets of unified TCI states among the N sets of unified TCI states as the TCI state corresponding to the PDSCH and/or the DMRS corresponding to the PDSCH, where the designated scheme adopts M-TRP communication; or in a case where the terminal supports dynamic switching between the designated scheme and the S-TRP communication scheme, determine one set of unified TCI states from the N sets of unified TCI states as the TCI state corresponding to the PDSCH and/or the DMRS corresponding to the PDSCH.

In some embodiments, the receiving module is further configured to: receive third information, where the third information is used to configure a CMR; in a case that the terminal does not support dynamic switching between the designated scheme and the S-TRP communication scheme, a number of NZP CSI-RS resources selected by the terminal from the multiple NZP CSI-RS resources is greater than 1, and the CMR includes the multiple NZP CSI-RS resources, where the designated scheme adopts M-TRP communication.

In some embodiments, the apparatus further includes: a sending module, configured to send fourth information, where the fourth information is used to indicate whether the terminal supports an ability to dynamically switch between the designated scheme and the S-TRP communication scheme.

In some embodiments, the designated scheme is coherent joint transmission (CJT).

In some embodiments, the CJT includes at least one of the following: one CMR configured by a network device includes LNZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

In some embodiments, the first information is carried by a MAC CE, and the N sets of unified TCI states indicated by the first MAC CE correspond to a code point in a TCI state indication field carried in the DCI.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

In some embodiments, the second information is carried via RRC signaling; and/or the second information is carried by a third MAC CE.

In some embodiments, the unified TCI state includes at least one of the following: a joint TCI state; or at least one of a downlink TCI state and an uplink TCI state.

In some embodiments, the sending module is further configured to: send fifth information, where the fifth information is used to indicate the NZP CSI-RS resource selected by the terminal.

According to the fourth aspect of an embodiment of the present disclosure, an apparatus for determining a TCI state is provided, which includes: a sending module, configured to send first information, where the first information is used to determine N sets of unified TCI states, where N is a positive integer; and where the sending module is further configured to send second information, where the second information is used to determine whether a PDSCH and/or a DMRS corresponding to the PDSCH is configured to adopt a designated scheme for communication.

In some embodiments, the PDSCH and/or the DMRS corresponding to the PDSCH are scheduled by DCI format 1_0; or the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

In some embodiments, the sending module is further configured to: send third information, where the third information is used to configure a CMR; the CMR includes a NZP CSI-RS resource; the CMR includes multiple NZP CSI-RS resources, and the network device does not configure the terminal not to perform NZP CSI-RS resource selection; the CMR includes multiple NZP CSI-RS resources, and the network device configures the terminal not to perform NZP CSI-RS resource selection.

In some embodiments, the apparatus further includes: a receiving module, configured to receive fourth information, where the fourth information is used to indicate whether a terminal supports an ability to dynamically switch between a designated scheme and a S-TRP communication scheme.

In some embodiments, the designated scheme is coherent joint transmission (CJT).

In some embodiments, the CJT includes at least one of the following: one CMR configured by the network device includes L NZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

In some embodiments, the first information is carried by a first MAC CE, and the N sets of unified TCI states indicated by the first MAC CE correspond to a code point in a TCI state indication field carried in the DCI.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

In some embodiments, the second information is carried via RRC signaling; and/or the second information is carried by a third MAC CE.

In some embodiments, the unified TCI state includes at least one of the following: a joint TCI state; or at least one of a downlink TCI state and an uplink TCI state.

In some embodiments, the receiving module is further configured to: receive fifth information, where the fifth information is used to indicate the NZP CSI-RS resource selected by a terminal.

According to the fifth aspect of an embodiment of the present disclosure, a device for determining a TCI state is provided, which includes: a processor; and a memory for storing processor-executable instructions; where the processor is configured to execute the first aspect and any one of the methods in the first aspect.

According to the sixth aspect of an embodiment of the present disclosure, a device for determining a TCI state is provided, which includes: a processor; and a memory for storing processor-executable instructions; where the processor is configured to execute the second aspect and any one of the methods in the second aspect.

According to a seventh aspect of an embodiment of the present disclosure, a non-transitory computer-readable storage medium, where when instructions in the storage medium are executed by a processor of a terminal, the terminal is enabled to execute the first aspect and any one of the methods in the first aspect.

According to an eighth aspect of an embodiment of the present disclosure, a non-transitory computer-readable storage medium, where when instructions in the storage medium are executed by a processor of a network device, the network device is enabled to execute the second aspect and any one of the methods in the second aspect.

The technical solutions provided by embodiments of the present disclosure may have the following beneficial effects: when a specified communication scheme is configured, at least one of the indicated multiple TCI states is determined to be used for communication. This improves the flexibility of data transmission based on a unified TCI state, thereby improving the performance of data transmission and/or reception.

It is to be understood that the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an exemplary embodiment.
FIG. 2 is a flow chart showing a method for determining a TCI state according to an exemplary embodiment.
FIG. 3 is a flow chart showing another method for determining a TCI state according to an exemplary embodiment.
FIG. 4 is a flow chart showing yet another method for determining a TCI state according to an exemplary embodiment.
FIG. 5 is a flowchart showing still another method for determining a TCI state according to an exemplary embodiment.
FIG. 6 is a flow chart showing another method for determining a TCI state according to an exemplary embodiment.
FIG. 7 is a flowchart showing yet another method for determining a TCI state according to an exemplary embodiment.
FIG. 8 is a flowchart showing still another method for determining a TCI state according to an exemplary embodiment.
FIG. 9 is a flow chart showing another method for determining a TCI state according to an exemplary embodiment.
FIG. 10 is a flowchart showing yet another method for determining a TCI state according to an exemplary embodiment.
FIG. 11 is a schematic diagram of an apparatus for determining a TCI state according to an exemplary embodiment.
FIG. 12 is a schematic diagram of another apparatus for determining a TCI state according to an exemplary embodiment.
FIG. 13 is a schematic diagram of a device for determining a TCI state according to an exemplary embodiment.
FIG. 14 is a schematic diagram of another device for determining a TCI state according to an exemplary embodiment.

### DETAILED DESCRIPTION

Exemplary embodiments are described in detail herein, with examples illustrated in the accompanying drawings. When the following description refers to the drawings, identical numerals in different drawings represent identical or similar elements unless otherwise indicated. The embodiments described in the following exemplary embodiments are not intended to represent all embodiments consistent with the present disclosure.

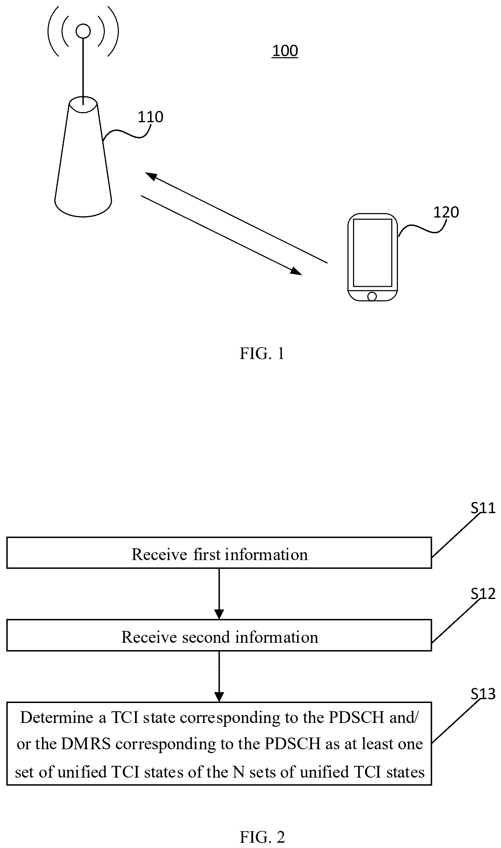

The communication method involved in the present disclosure can be applied to the wireless communication system 100 shown in FIG. 1. The network system may include a network device 110 and a terminal 120. It will be understood that the wireless communication system shown in FIG. 1 is merely for illustrative purposes, and the wireless communication system may also include other network devices, such as core network devices, wireless relay devices, and wireless backhaul devices, which are not shown in FIG. 1. The embodiments of the present disclosure do not limit the number of network devices and terminals included in the wireless communication system.

It should be further understood that the wireless communication system of the embodiments of the present disclosure is a network that provides wireless communication capabilities. A wireless communication system can employ various communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), and carrier sense multiple access with collision avoidance. Based on factors such as capacity, rate, and latency, networks can be categorized as 2G (generation) networks, 3G networks, 4G networks, or future evolution networks, such as the fifth generation wireless communication system (5G) network. A 5G network may also be referred to as NR. For ease of description, this disclosure may sometimes refer to a wireless communication network as simply a network.

Furthermore, the network device 110 referred to in this disclosure may also be referred to as a wireless access network device. This wireless access network device may be a base station, an evolved node B (eNB), a home base station, an access point (AP) in a wireless fidelity (Wi-Fi) system, a wireless relay node, a wireless backhaul node, a transmission point (TP), or a TRP. It may also be a gNB in a NR system, or a component or part of a base station. In the case of a vehicle-to-everything (V2X) communication system, the network device may also be an onboard device. It should be understood that in the embodiments of the present disclosure, there is no limitation on the specific technology and specific device form adopted by the network device.

Furthermore, the terminal 120 referred to in this disclosure may also be referred to as a terminal device, user equipment (UE), mobile station (MS), mobile terminal (MT), etc., and is a device that provides voice and/or data connectivity to users. For example, the terminal may be a handheld device or vehicle-mounted device with wireless connectivity. Currently, some examples of terminals include smartphones, pocket personal computers (PPC), handheld computers, personal digital assistants (PDA), laptops, tablets, wearable devices, or vehicle-mounted devices. Furthermore, in the case of a vehicle-to-everything (V2X) communication system, the terminal device may also be a vehicle-mounted device. It should be understood that in the embodiments of the present disclosure, there is no limitation on the specific technology and specific device form adopted by the terminal.

In the embodiments of the present disclosure, network device 110 and terminal 120 can utilize any feasible wireless communication technology to achieve data transmission between them. The transmission channel corresponding to the transmission of data from network device 110 to terminal 120 is called a downlink channel (DL), and the transmission channel corresponding to the transmission of data from terminal 120 to network device 110 is called an uplink channel (UL). It is understood that the network device involved in the embodiments of the present disclosure may be a base station. Of course, the network device may also be any other possible network device, and the terminal may be any possible terminal, and this disclosure is not limited thereto.

In NR, especially when the communication band is in frequency range 2, beam-based transmission and reception are required to ensure coverage due to the rapid attenuation of high-frequency channels.

In release (Rel) -16, the beams used for transmission of the PDCCH and/or PDCCH DMRS, the PDSCH and/or PDSCH DMRS, the PUCCH and/or PUCCH DMRS, the PUSCH and/or PUSCH DMRS, and/or reference signals are independently indicated. Reference signals may include the channel state information reference signal (CSI-RS), the sounding reference signal (SRS), the positioning reference signal (PRS), and the time-frequency tracking reference signal (TRS). For example, the CSI-RS may include the CSI-RS used for channel state information measurement, the CSI-RS used for beamforming, or the CSI-RS used for pathloss estimation. The SRS may include an SRS for codebook-based or non-codebook-based channel state information measurement, an SRS for beam measurement, an SRS for antenna switching, or an SRS for positioning measurement.

Typically, in traditional methods, the PDCCH and/or PDCCH DMRS, and the PUCCH and/or PUCCH DMRS are transmitted by activating a beam through a MAC CE, while the PDSCH and/or PDSCH DMRS, and the PUSCH and/or PUSCH DMRS are transmitted by indicating their corresponding beams respectively through DCI signaling.

To reduce signaling overhead, Rel-17 proposes the use of a unified TCI state. Currently, a unified TCI state can be indicated separately for uplink and downlink, such as a downlink TCI state or an uplink TCI state. A unified TCI state can also be indicated jointly for uplink and downlink, such as a joint TCI state. For example, if a network device indicates a downlink TCI state for downlink, this downlink TCI state can be used for the transmission of the terminal's PDSCH and/or PDSCH DMRS, PDCCH and/or PDCCH DMRS, and at least a portion of the CSI-RS. This at least a portion of the CSI-RS can be aperiodic CSI-RS. For another example, if a network device indicates an uplink TCI state for uplink, this uplink TCI state can be used for the transmission of the terminal's PUSCH and/or PUSCH DMRS, PUCCH and/or PUCCH DMRS, and at least a portion of the SRS. For another example, if the network device indicates a joint TCI state, the joint TCI state can be used for transmission of uplink and downlink channels and/or reference signals at the same time.

It should be noted that "transmission" in the present disclosure may be considered to include sending and/or receiving.

It is understood that the TCI state can be used to indicate which receiving beams the terminal uses when receiving the PDCCH and/or PDCCH DMRS and/or the PDSCH and/or PDSCH DMRS. For example, the receiving beam corresponding to the transmitting beam the same as that for the terminal to receive which synchronization signal and physical broadcast channel block (SSB) or CSI-RS sent by the network device. That is, the PDCCH and/or its DMRS, and/or the PDSCH and/or its DMRS, are quasi co-located with the SSB or CSI-RS. The TCI state can also be used to indicate which transmitting beam the terminal uses when transmitting the PUCCH and/or its DMRS, and/or the PUSCH and/or its DMRS. For example, the transmitting beam corresponding to the receiving beam the same as that for the terminal to receive which SSB or CSI-RS sent by the network device, or the transmitting beam the same as that for the terminal to send which SRS. That is, the PUCCH and/or its DMRS, and/or The PUSCH and/or its DMRS, are quasi co-located with the SSB, CSI-RS, or SRS. The beam refers to the quasi co-location (QCL) type D.

The beams involved above may be indicated by the TCI states or spatial relation information (spatialrelationinfo). The TCI state corresponding to the PDCCH includes the TCI state corresponding to the PDCCH and/or the DMRS of the PDCCH, that is, the TCI state is used for receiving the PDCCH and/or the DMRS of the PDCCH. Similarly, the TCI state corresponding to the PDSCH includes the TCI state corresponding to the PDSCH and/or PDSCH DMRS, that is, the TCI state is used for the reception of the PDSCH and/or PDSCH DMRS; the TCI state or spatialrelationinfo corresponding to the PUCCH includes the TCI state or spatialrelationinfo corresponding to the PUCCH and/or PUCCH DMRS, that is, the TCI state or spatialrelationinfo is used for the transmission of the PUCCH and/or PUCCH DMRS; the TCI state or spatialrelationinfo corresponding to the PUSCH includes the TCI state or spatialrelationinfo corresponding to the PUSCH and/or PUSCH DMRS, that is, the TCI state or spatialrelationinfo is used for the transmission of the PUSCH and/or PUSCH DMRS.

However, currently Rel-17 only considers unified TCI state for single (S)-TRP. That is, configuration of only one set of unified TCI states is considered for beam indication. For example, a set of unified TCI states can include an uplink TCI state and/or a downlink TCI state; alternatively, a set of unified TCI states can include a joint TCI state. When multiple (M) TRPs provide transmission services to a terminal, one or more sets of TCI states are configured accordingly. In this case, how to indicate which unified TCI states to use for each channel or reference signal has not yet been determined.

For the case of M-TRP, the S-DCI method is included. Among the corresponding PDCCH and/or PDCCH DMRS, PDSCH and/or PDSCH DMRS, PUCCH and/or PUCCH DMRS, and PUSCH and/or PUSCH DMRS, if the PDSCH is configured with coherent joint transmission (CJT), when the S-DCI indicates two sets of unified TCI states, such as indicating two joint TCI states, or indicting two DL downlink TCI states and/or two uplink TCI states. In this case, for the PDSCH and/or PDSCH DMRS configured with the PDSCH-CJT transmission, it does not indicate which one or both of the two unified TCI states should be used. Therefore, how the terminal should use the TCI state for the communication of the PDSCH and/or the DMRS corresponding to PDSCH is currently undecided.

Therefore, the present disclosure provides a TCI state determination method, apparatus, device, and storage medium. These methods, when configured for communication using a designated scheme, determine whether to use at least one of multiple indicated TCI states for communication. This improves the flexibility of data transmission based on a unified TCI state, thereby enhancing the performance of data transmission and/or reception.

FIG. 2 is a flow chart of a method for determining a TCI state according to an exemplary embodiment. As shown in FIG. 2, the method is executed by a terminal and may include the following steps:
In step S11, first information is received.

In some embodiments, the terminal may receive first information, where the first information is used to determine N sets of unified TCI states, where N is a positive integer.

For example, the terminal may receive first information sent by the network device. The terminal determines N sets of unified TCI states based on the first information. For example, the first information may indicate N sets of unified TCI states. Alternatively, the first information may indicate one of multiple code points, and N sets of unified TCI states corresponding to each code point among the multiple code points may be configured through a MAC CE. Accordingly, the terminal determines the N sets of unified TCI states corresponding to the code point indicated by the first information.

In some embodiments, N may be 2.

In some embodiments, the terminal may determine one set of unified TCI states based on the first information. In other embodiments, the terminal may determine multiple sets of unified TCI states based on the first information.

In some embodiments, the terminal may determine N sets of unified TCI states based on one piece of first information.

Of course, in other embodiments, the terminal may determine N sets of unified TCI states based on multiple pieces of first information. For example, when N is 5, the terminal may determine four sets of unified TCI states based on first information 1 and one set of unified TCI states based on first information 2, thereby enabling the terminal to determine five sets of unified TCI states based on first information 1 and first information 2.

For another example, when N is 2, the terminal may determine two sets of unified TCI states, including a first set and a second set, based on the first information 1, and determine an updated first set of unified TCI states based on the first information 2. In this way, the terminal determines two sets of unified TCI states based on the first information 1 and the first information 2, namely, the updated first set of unified TCI states and the unchanged second set of unified TCI states.

In step S12, second information is received.

In some embodiments, the terminal may receive second information, where the second information is used to determine whether the PDSCH and/or the DMRS corresponding to the PDSCH is configured to use a designated scheme for communication.

For example, the terminal may receive the second information sent by the network device. Based on the second information, the terminal determines that the PDSCH and/or the DMRS corresponding to the PDSCH are configured to use a designated scheme for communication.

In some embodiments, the designated scheme may be a CJT scheme.

In step S13, a TCI state corresponding to the PDSCH and/or the DMRS corresponding to the PDSCH is determined as at least one set of unified TCI states of the N sets of unified TCI states.

In some embodiments, the terminal may determine that the TCI state corresponding to the PDSCH is at least one set of unified TCI states of the N sets of unified TCI states.

For example, the terminal may determine a designated condition. If the designated condition is met, the terminal may determine at least one set of unified TCI states from the N sets of unified TCI states according to the N sets of unified TCI states determined based on the first information. The terminal determines the at least one determined set of unified TCI states as the TCI state corresponding to the PDSCH.

In some embodiments, the terminal may determine, under a designated condition, that the TCI state corresponding to the DMRS corresponding to the PDSCH is at least one set of unified TCI states of the N sets of unified TCI states.

For example, if the terminal determines that a designated condition is currently met, the terminal may determine at least one set of unified TCI states from the N sets of unified TCI states determined based on the first information. The terminal determines the at least one determined set of unified TCI states as the TCI state corresponding to the DMRS corresponding to the PDSCH.

In some embodiments, the terminal may, under designated conditions, determine that the TCI state corresponding to the PDSCH is at least one set of unified TCI states of the N sets of unified TCI states. Furthermore, under designated conditions, the terminal may determine that the TCI state corresponding to the DMRS corresponding to the PDSCH is at least one set of unified TCI states of the N sets of unified TCI states.

For example, if the terminal determines that a designated condition is currently met, the terminal may determine at least one set of unified TCI states from the N sets of unified TCI states determined based on the first information. The terminal determines the at least one determined set of unified TCI states as the TCI state corresponding to the PDSCH, and the terminal determines the at least one determined set of unified TCI states as the TCI state corresponding to the DMRS corresponding to the PDSCH.

It can be understood that the terminal can also use the determined at least one set of unified TCI states to receive the PDSCH and/or the DMRS corresponding to the PDSCH.

In some embodiments, the designated condition may be a condition under which the terminal is unable to determine the corresponding TCI state for receiving the PDSCH and/or the DMRS corresponding to the PDSCH based on the DCI. For example, the DCI itself does not indicate the corresponding TCI state for the terminal to receive the PDSCH and/or the DMRS corresponding to the PDSCH. For another example, the DCI may indicate the corresponding TCI state for the terminal to receive the PDSCH and/or the DMRS corresponding to the PDSCH, but the terminal does not have time to decode the DCI, so that the terminal is still unable to determine corresponding the TCI state for receiving the PDSCH and/or the DMRS corresponding to the PDSCH based on the DCI.

Of course, in some embodiments, if the DCI can indicate the corresponding TCI state for the terminal to receive the PDSCH and/or the DMRS corresponding to the PDSCH, and the terminal can decode the DCI before receiving the PDSCH and/or the DMRS corresponding to the PDSCH to determine the unified TCI state indicated by the DCI, the terminal can determine, based on the DCI, that the TCI state corresponding to the PDSCH and/or the DMRS corresponding to the PDSCH is at least one set of unified TCI states of the N sets of unified TCI states.

The present disclosure determines to use at least one set of TCI states among indicated multiple sets of TCI states for communication when configuring a designated scheme for communication, thereby improving the flexibility of data transmission based on a unified TCI state and thereby improving the performance of data transmission and/or reception.

In the TCI state determination method provided by the embodiment of the present disclosure, the TCI state corresponding to the PDSCH and/or the DMRS corresponding to the PDSCH is determined as the at least one set of unified TCI states of the N sets of unified TCI states when at least one of the following conditions is met: the PDSCH and/or the DMRS corresponding to the PDSCH are scheduled by DCI (format) 1_0; the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH is less than a time threshold, and the DCI format corresponding to the second DCI is DCI format 1_1 or DCI format 1_2.

In some embodiments, the PDSCH and/or the DMRS corresponding to the PDSCH are scheduled by DCI format 1_0.

For example, a terminal receives DCI sent by a network device. The DCI format corresponding to the DCI is DCI format 1_0 . Based on DCI format 1_0, the terminal - determines to receive the PDSCH and/or the DMRS corresponding to the PDSCH. The terminal can then determine that a designated condition is met. The terminal can determine that the TCI state corresponding to the PDSCH and/or the DMRS corresponding to the PDSCH is at least one set of unified TCI states of the N sets of unified TCI states.

It can be understood that since the DCI format 1_0 does not have an indication field for indicating the TCI state corresponding to the PDSCH and/or the DMRS corresponding to the PDSCH, that is, the DCI format 1_0 does not have a first indication field for indicating that the PDSCH adopts at least one set of unified TCI states of the N sets of unified TCI states. Obviously, the terminal cannot determine the TCI state corresponding to the PDSCH and/or the DMRS corresponding to the PDSCH based on the DCI format 1_0. In this case, the terminal can determine that the TCI state corresponding to the PDSCH and/or the DMRS corresponding to the PDSCH is at least one set of unified TCI states of the N sets of unified TCI states based on the N sets of unified TCI states determined by the first information.

In some embodiments, since DCI format 1_0 does not have a first indication field, the first time interval between DCI format 1_0 and the PDSCH may be less than or equal to the time threshold, or may be greater than or equal to the time threshold. And/or, the second time interval between DCI format 1_0 and the DMRS corresponding to the PDSCH may be less than or equal to the time threshold, or may be greater than or equal to the time threshold.

It can be understood that because the first time interval is the time interval between the time of receiving DCI format 1_0 and the time of receiving the PDSCH, and the second time interval is the time interval between the time of receiving DCI format 1_0 and the time of receiving the DMRS corresponding to the PDSCH, it is clear that regardless of how long the first time interval and/or the second time interval are, the terminal cannot determine the TCI state corresponding to the PDSCH and/or the DMRS corresponding to the PDSCH based on the DCI format 1_0.

In some embodiments, the PDSCH and/or the DMRS corresponding to the PDSCH are scheduled by a first DCI. The terminal can then determine that a designated condition is met. The terminal can determine that the TCI state corresponding to the PDSCH and/or the DMRS corresponding to the PDSCH is at least one set of unified TCI states of the N sets of unified TCI states. The first DCI does not include a first indication field. The first indication field is used to indicate that the PDSCH adopts at least one set of unified TCI states of the N sets of unified TCI states. The DCI format corresponding to the first DCI is DCI format 1_1 or DCI format 1_2.

For example, a terminal receives a first DCI sent by a network device. The DCI format corresponding to the first DCI may be DCI format 1_1 or DCI format 1_2. The network device configures the first DCI to not include a first indication field. The terminal determines to receive a PDSCH and/or a DMRS corresponding to the PDSCH based on the first DCI. The terminal may then determine that the designated condition is satisfied.

It can be understood that since the network device configures the first DCI without the first indication field, that is, there is no first indication field in DCI format 1_1, and/or there is no first indication field in DCI format 1_2. Obviously, the terminal cannot determine the TCI state corresponding to the PDSCH and/or the DMRS corresponding to the PDSCH based on the first DCI. In this case, the terminal can determine the TCI state corresponding to the PDSCH and/or the DMRS corresponding to the PDSCH as at least one set of unified TCI states of the N sets of unified TCI states based on the N sets of unified TCI states determined by the first information.

In some embodiments, since the first DCI configured by the network device does not contain the first indication field, the third time interval between the first DCI and the PDSCH may be less than or equal to the time threshold, or the third time interval may be greater than or equal to the time threshold. And/or, the fourth time interval between the first DCI and the DMRS corresponding to the PDSCH may be less than or equal to the time threshold, or the fourth time interval may be greater than or equal to the time threshold.

It can be understood that because the third time interval is the time interval between the time of receiving the first DCI and the time of receiving the PDSCH, and the fourth time interval is the time interval between the time of receiving the first DCI and the time of receiving the DMRS corresponding to the PDSCH, it is clear that no matter how long the third time interval and/or the fourth time interval are, the terminal cannot determine the TCI state corresponding to the PDSCH and/or the DMRS corresponding to the PDSCH based on the first DCI.

In some embodiments, the PDSCH and/or the DMRS corresponding to the PDSCH are scheduled by a second DCI. The terminal can then determine that a designated condition is met. The terminal can determine that the TCI state corresponding to the PDSCH and/or the DMRS corresponding to the PDSCH is at least one set of unified TCI states of the N sets of unified TCI states. The second DCI includes a first indication field, the time interval between the second DCI and the PDSCH and/or the DMRS corresponding to the PDSCH is less than a time threshold, and the DCI format corresponding to the second DCI is DCI format 1_1 or DCI format 1_2.

For example, the terminal receives the second DCI sent by the network device. The DCI format corresponding to the second DCI can be DCI format 1_1 or DCI format 1_2. The network device configures the second DCI to include a first indication field, the fifth time interval between the second DCI and the PDSCH is less than a time threshold, and/or the sixth time interval between the second DCI and the DMRS corresponding to the PDSCH is less than a time threshold. The terminal determines to receive the PDSCH and/or the DMRS corresponding to the PDSCH based on the second DCI. The terminal can then determine that the designated condition is met.

It can be understood that although the network device configures the second DCI to have a first indication field, that is , there is a first indication field in DCI format 1_1, and/or there is a first indication field in DCI format 1_2. However, since the fifth time interval is less than the time threshold, and/or the sixth time interval is less than the time threshold, the terminal does not have time to decode the second DCI before receiving the PDSCH and/or receiving the DMRS corresponding to the PDSCH. Therefore, in this case, the terminal still cannot determine the TCI state corresponding to the PDSCH and/or the DMRS corresponding to the PDSCH based on the second DCI. In this case, the terminal can determine that the TCI state corresponding to the PDSCH and/or the DMRS corresponding to the PDSCH is at least one set of unified TCI states among the N sets of unified TCI states based on the N sets of unified TCI states determined by the first information.

This disclosure provides a variety of possible conditions for specifying conditions to be applied to determine, under different configuration schemes, at least one set of TCI states from multiple indicated sets of TCI states for communication. This improves the flexibility of data transmission based on a unified TCI state, thereby enhancing the performance of data transmission and/or reception.

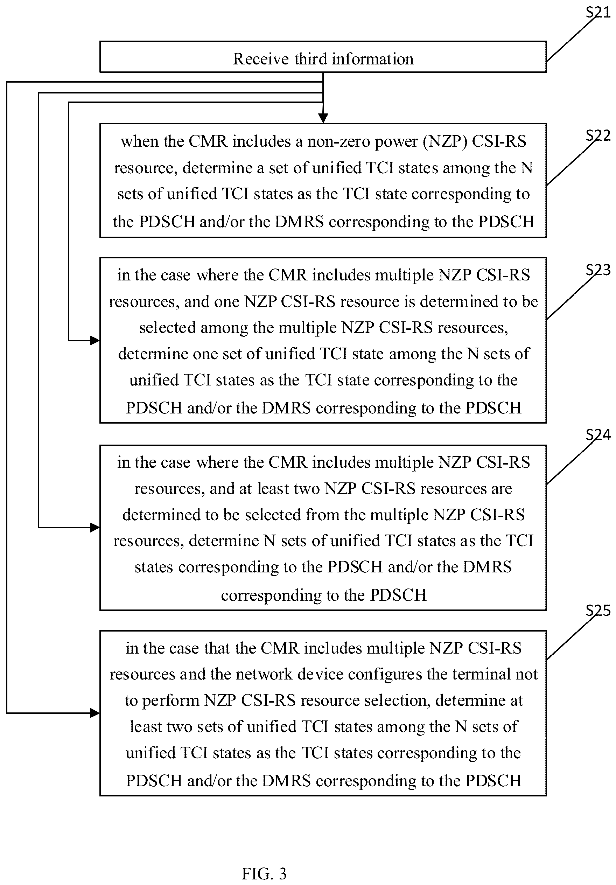

In the TCI state determination method provided in the embodiments of the present disclosure, FIG. 3 is a flow chart of another TCI state determination method according to an exemplary embodiment. As shown in FIG. 3, the method may further include the following steps:

In step S21, third information is received.

In some embodiments, the terminal may receive third information, where the third information is used to configure a channel measurement resource (CMR). In other embodiments, the third information may also be used to configure multiple CMRs.

For example, the terminal receives third information sent by the network device. The third information can be used to configure a CMR.

For another example, the terminal receives third information sent by the network device. The third information can be used to configure multiple CMRs.

In some embodiments, in S13, the determining the PDSCH and/or the DMRS corresponding to the PDSCH, where the corresponding TCI state is at least one set of unified TCI states of the N sets of unified TCI states, may further include the following steps:
In step S22, in the case where the CMR includes a non-zero power (NZP) CSI-RS resource, a set of unified TCI states among the N sets of unified TCI states is determined as the TCI state corresponding to the PDSCH and/or the DMRS corresponding to the PDSCH.

In some embodiments, when a CMR includes an NZP CSI-RS resource, the terminal determines one set of unified TCI states among the N sets of unified TCI states as the TCI state corresponding to the PDSCH and/or the DMRS corresponding to the PDSCH.

For example, when a CMR includes an NZP CSI-RS resource and N is 2, the terminal determines that the first or second set of unified TCI states among the N sets of unified TCI states is the TCI state corresponding to the PDSCH and/or the DMRS corresponding to the PDSCH.

It is understandable that if a CMR only includes one NZP CSI-RS resource, that is, the network device will only use a TRP or TRP group corresponding to this one NZP CSI-RS resource to transmit the PDSCH and/or DMRS corresponding to the PDSCH to the terminal. This TRP or TRP group corresponds to only one set of unified TCI states. For example, the set of unified TCI state for receiving the PDSCH and/or DMRS corresponding to the PDSCH may include a joint TCI state or a downlink TCI state.

In some embodiments, for multiple CMRs, when at least one CMR includes multiple NZP CSI-RSs, and when each CMR in the CMR including multiple NZP CSI-RSs includes an NZP CSI-RS resource, the terminal determines one set of unified TCI states among the N sets of unified TCI states as the TCI state corresponding to the PDSCH and/or the DMRS corresponding to the PDSCH.

For example, for multiple CMRs, when at least one CMR includes multiple NZP CSI-RSs, for the case where each CMR in the CMR including multiple NZP CSI-RSs includes an NZP CSI-RS resource, and N is 2, the terminal determines the first or second set of unified TCI states in the N sets of unified TCI states as the TCI state corresponding to the PDSCH and/or the DMRS corresponding to the PDSCH.

It is understandable that if at least one CMR includes multiple NZP CSI-RSs, for each CMR in the CMR including multiple NZP CSI-RSs that only includes one NZP CSI-RS resource, that is, for each CMR, the network device will only use a TRP or TRP group corresponding to this one NZP CSI-RS resource to transmit the PDSCH and/or DMRS corresponding to the PDSCH to the terminal. This TRP or TRP group corresponds to only one set of unified TCI states. For example, the set of unified TCI state for receiving the PDSCH and/or DMRS corresponding to the PDSCH may include a joint TCI state or a downlink TCI state.

In step S23, in the case where the CMR includes multiple NZP CSI-RS resources, and one NZP CSI-RS resource is determined to be selected among the multiple NZP CSI-RS resources, one set of unified TCI state among the N sets of unified TCI states is determined as the TCI state corresponding to the PDSCH and/or the DMRS corresponding to the PDSCH.

In some embodiments, in the case where one CMR includes multiple NZP CSI-RS resources, and the terminal determines to select one NZP CSI-RS resource among the multiple NZP CSI-RS resources, the terminal determines one set of unified TCI states among the N sets of unified TCI states as the TCI state corresponding to the PDSCH and/or the DMRS corresponding to the PDSCH.

For example, in the case where one CMR includes multiple NZP CSI-RS resources, the terminal determines to select one NZP CSI-RS resource among the multiple NZP CSI-RS resources, and N is 2, the terminal determines the first or second set of unified TCI states among the N sets of unified TCI states as the TCI state corresponding to the PDSCH and/or the DMRS corresponding to the PDSCH.

It is understood that if a CMR includes multiple NZP CSI-RS resources, the terminal determines and selects one NZP CSI-RS resource among the multiple NZP CSI-RS resources, and inform the network device which NZP CSI-RS resource is selected among the multiple NZP CSI-RS resources, then the network device will only use a TRP or TRP group corresponding to this one NZP CSI-RS resource to transmit the PDSCH and/or DMRS corresponding to the PDSCH to the terminal. This TRP or TRP group corresponds to only one unified TCI state. For example, the set of unified TCI states for receiving the PDSCH and/or DMRS corresponding to the PDSCH includes a joint TCI state or a downlink TCI state.

In some embodiments, for multiple CMRs, when at least one CMR includes multiple NZP CSI-RSs, in the case where each of the CMRs including multiple NZP CSI-RSs includes multiple NZP CSI-RS resources, and the terminal determines to select one NZP CSI-RS resource among the multiple NZP CSI-RS resources, the terminal determines one set of unified TCI states among the N sets of unified TCI states as the TCI state corresponding to the PDSCH and/or the DMRS corresponding to the PDSCH.

For example, for multiple CMRs, when at least one CMR includes multiple NZP CSI-RSs, in the case where each of the CMRs including multiple NZP CSI-RSs includes multiple NZP CSI-RS resources, and the terminal determines to select one NZP CSI-RS resource among the multiple NZP CSI-RS resources, and N is 2, the terminal determines the first or second set of unified TCI states among the N sets of unified TCI states as the TCI state corresponding to the PDSCH and/or the DMRS corresponding to the PDSCH.

It is understood that when at least one CMR includes multiple NZP CSI-RS resources, and each CMR among the CMRs including multiple NZP CSI-RSs includes multiple NZP CSI-RS resources. For each CMR, the terminal determines and selects one NZP CSI-RS resource among the multiple NZP CSI-RS resources, and inform the network device which NZP CSI-RS resource is selected among the multiple NZP CSI-RS resources, then the network device will only use a TRP or TRP group corresponding to this one NZP CSI-RS resource to transmit the PDSCH and/or DMRS corresponding to the PDSCH to the terminal. This TRP or TRP group corresponds to only one set of unified TCI states. For example, the set of unified TCI states for receiving the PDSCH and/or DMRS corresponding to the PDSCH includes a joint TCI state or a downlink TCI state.

In some embodiments, in the case where the terminal determines to select one NZP CSI-RS resource among the multiple NZP CSI-RS resources, the terminal may also send information indicating the selected one NZP CSI-RS resource. For example, the terminal sends indication information to the network device, and the indication information is used to instruct the one NZP CSI-RS resource selected from the multiple NZP CSI-RS resources by the terminal.

It should be understood that the above-mentioned indication information can also be called "first indication information", "feedback information", "first feedback information", "reporting information", "terminal selection information", etc. The present disclosure does not limit the name of the indication information.

In step S24, in the case where the CMR includes multiple NZP CSI-RS resources, and at least two NZP CSI-RS resources are determined to be selected from the multiple NZP CSI-RS resources, at least two sets of unified TCI states among the N sets of unified TCI states are determined as the TCI states corresponding to the PDSCH and/or the DMRS corresponding to the PDSCH.

In some embodiments, in the case where one CMR includes multiple NZP CSI-RS resources, and the terminal determines to select at least two NZP CSI-RS resources from the multiple NZP CSI-RS resources, the terminal determines at least two sets of unified TCI states among the N sets of unified TCI states as the TCI states corresponding to the PDSCH and/or the DMRS corresponding to the PDSCH.

For example, in the case where one CMR includes multiple NZP CSI-RS resources, the terminal determines to select at least two NZP CSI-RS resources from the multiple NZP CSI-RS resources, and N is 2, the terminal determines two sets of unified TCI states among the N sets of unified TCI states as the TCI states corresponding to the PDSCH and/or the DMRS corresponding to the PDSCH.

It is understood that if a CMR includes multiple NZP CSI-RS resources, the terminal determines and selects A NZP CSI-RS resources from the multiple NZP CSI-RS resources, and inform the network device which A NZP CSI-RS resources are selected from the multiple NZP CSI-RS resources, then the network device will only use A TRPs or A TRP groups corresponding to the A NZP CSI-RS resources selected by the terminal to transmit the PDSCH and/or the DMRS corresponding to the PDSCH to the terminal. These A TRPs or A TRP groups then correspond to at least two set of unified TCI states. A is an integer greater than 1. For example, each set of unified TCI states for receiving the PDSCH and/or the DMRS corresponding to the PDSCH includes a joint TCI state or a downlink TCI state.

It can be understood that when N is 2, no matter how many NZP CSI-RS resources are selected by the terminal from the multiple NZP CSI-RS resources, e.g., 2, 3 or 4 NZP CSI-RS resources are selected from 4 NZP CSI-RS resources, the selected multiple NZP CSI-RS resources only use two sets of unified TCI states.

In some embodiments, for multiple CMRs, when at least one CMR includes multiple NZP CSI-RSs, in the case where each of the CMRs including multiple NZP CSI-RSs includes multiple NZP CSI-RS resources, and the terminal determines to select at least two NZP CSI-RS resources among the multiple NZP CSI-RS resources, the terminal determines at least two sets of unified TCI states among the N sets of unified TCI states as the TCI state corresponding to the PDSCH and/or the DMRS corresponding to the PDSCH.

For example, for multiple CMRs, when at least one CMR includes multiple NZP CSI-RSs, in the case where each of the CMRs including multiple NZP CSI-RSs includes multiple NZP CSI-RS resources, and the terminal determines to select at least two NZP CSI-RS resources among the multiple NZP CSI-RS resources, and N is 2, the terminal determines the two sets of unified TCI states among the N sets of unified TCI states as the TCI state corresponding to the PDSCH and/or the DMRS corresponding to the PDSCH.

It is understood that when at least one CMR includes multiple NZP CSI-RS resources, and each CMR among the CMRs including multiple NZP CSI-RSs includes multiple NZP CSI-RS resources. For each CMR, the terminal determines and selects A NZP CSI-RS resources among the multiple NZP CSI-RS resources, and inform the network device which A NZP CSI-RS resources are selected among the multiple NZP CSI-RS resources, then the network device will only use A TRPs or A TRP groups corresponding to these A NZP CSI-RS resources to transmit the PDSCH and/or DMRS corresponding to the PDSCH to the terminal. This A TRPs or A TRP groups corresponds to at least two sets of unified TCI states. A is an integer greater than 1. For example, each set of unified TCI states for receiving the PDSCH and/or DMRS corresponding to the PDSCH includes a joint TCI state or a downlink TCI state.

In some embodiments, in the case where the terminal determines to select at least two NZP CSI-RS resources among the multiple NZP CSI-RS resources, the terminal may also send information indicating the selected at least two NZP CSI-RS resources. For example, the terminal sends indication information to the network device, and the indication information is used to instruct the at least two NZP CSI-RS resources selected from the multiple NZP CSI-RS resources by the terminal.

In step S25, in the case that the CMR includes multiple NZP CSI-RS resources and the network device configures the terminal not to perform NZP CSI-RS resource selection, at least two sets of unified TCI states among the N sets of unified TCI states are determined as the TCI states corresponding to the PDSCH and/or the DMRS corresponding to the PDSCH.

In some embodiments, when a CMR includes multiple NZP CSI-RS resources and the network device configures the terminal not to perform NZP CSI-RS resource selection, the terminal determines at least two sets of unified TCI states among the N sets of unified TCI states as the TCI states corresponding to the PDSCH and/or the DMRS corresponding to the PDSCH.

For example, when a CMR includes multiple NZP CSI-RS resources, the network device configures the terminal not to perform NZP CSI-RS resource selection, and N is 2, the terminal determines two sets of unified TCI states among the N sets of unified TCI states as the TCI states corresponding to the PDSCH and/or the DMRS corresponding to the PDSCH.

It is understood that if a CMR includes multiple NZP CSI-RS resources, the network device configures the terminal not to perform NZP CSI-RS resource selection, then the network device will use the multiple TRPs or multiple TRP groups corresponding to the multiple NZP CSI-RS resources included in the CMR to transmit the PDSCH and/or DMRS corresponding to the PDSCH to the terminal. These multiple TRPs or multiple TRP groups then correspond to at least two sets of unified TCI states. Specifically, each set of unified TCI states for receiving the PDSCH and/ or DMRS corresponding to the PDSCH includes a joint TCI state or a downlink TCI state.

It can be understood that when N is 2, for example, a CMR includes 2, 3 or 4 NZP CSI-RS resources, for multiple NZP CSI-RS resources included in one CMR only use two sets of unified TCI states.

In some embodiments, for multiple CMRs, when at least one CMR includes multiple NZP CSI-RSs, in the case where each CMR among the CMRs including multiple NZP CSI-RSs includes multiple NZP CSI-RS resources, and the network device configures the terminal not to perform NZP CSI-RS resource selection, the terminal determines at least two sets of unified TCI states among the N sets of unified TCI states as the TCI states corresponding to the PDSCH and/or the DMRS corresponding to the PDSCH.

For example, for multiple CMRs, when at least one CMR includes multiple NZP CSI-RSs, in the case where each CMR among the CMRs including multiple NZP CSI-RSs includes multiple NZP CSI-RS resources, the network device configures the terminal not to perform NZP CSI-RS resource selection, and N is 2, the terminal determines two sets of unified TCI states among the N sets of unified TCI states as the TCI states corresponding to the PDSCH and/or the DMRS corresponding to the PDSCH.

It is understood that, for multiple CMRs, when at least one CMR includes multiple NZP CSI-RSs, in the case where each CMR among the CMRs including multiple NZP CSI-RSs includes multiple NZP CSI-RS resources, and the network device configures the terminal not to perform NZP CSI-RS resource selection, then for each CMR, the network device will use the multiple TRPs or multiple TRP groups corresponding to the multiple NZP CSI-RS resources included in the CMR to transmit the PDSCH and/or DMRS corresponding to the PDSCH to the terminal. These multiple TRPs or multiple TRP groups then correspond to at least two sets of unified TCI states. Specifically, each set of unified TCI states for receiving the PDSCH and/ or DMRS corresponding to the PDSCH includes a joint TCI state or a downlink TCI state.

It can be understood that when N is 2, for example, when there are multiple CMRs and at least one CMR includes multiple NZP CSI-RSs, for each CMR among the CMRs including multiple NZP CSI-RSs includes 2, 3 or 4 NZP CSI-RS resources, for multiple NZP CSI-RS resources included in the CMR only use two sets of unified TCI states.

This disclosure provides various methods for determining, under different configuration schemes, at least one set of TCI states from multiple sets of TCI states. This allows for communication using the determined at least one set of TCI states. This improves the flexibility of data transmission based on a unified TCI state, thereby enhancing the performance of data transmission and/or reception.

In the TCI state determination method provided by the embodiment of the present disclosure, in S13, the determining the PDSCH and/or the DMRS corresponding to the PDSCH, where the corresponding TCI state is at least one set of unified TCI states of the N sets of unified TCI states, may further include: when the terminal does not support dynamic switching between the designated scheme and the S-TRP communication scheme, determining at least two sets of unified TCI states among the N sets of unified TCI states as the TCI states corresponding to the PDSCH and/or the DMRS corresponding to the PDSCH, wherein the designated scheme adopts M-TRP communication; or, when the terminal supports dynamic switching between the designated scheme and the S-TRP communication scheme, determining one set of unified TCI states among the N sets of unified TCI states as the TCI state corresponding to the PDSCH and/or the DMRS corresponding to the PDSCH.

In some embodiments, when the terminal does not support dynamic switching between the designated scheme and the S-TRP communication scheme, at least two sets of unified TCI states among the N sets of unified TCI states are determined to be the TCI states corresponding to the PDSCH and/or the DMRS corresponding to the PDSCH, wherein the designated scheme adopts M-TRP communication.

For example, if the terminal does not support dynamic switching between CJT and S-TRP communication schemes, the terminal determines at least two sets unified TCI states among the N sets of unified TCI states and determines the at least two sets of unified TCI states as the TCI states corresponding to the PDSCH and/or the DMRS corresponding to the PDSCH.

It is understandable that when the terminal does not support dynamic switching between CJT and S-TRP communication schemes, that is, the terminal needs to always communicate based on the M-TRP communication scheme. Then the network device will use multiple TRPs or multiple TRP groups to send the PDSCH and/or DMRS corresponding to the PDSCH to the terminal, and then these multiple TRPs or multiple TRP groups correspond to at least two sets of unified TCI states. For example, each set of unified TCI states for receiving PDSCH and/or DMRS corresponding to PDSCH includes a joint TCI state, or a downlink TCI state.

It can be understood that when N is 2, the multiple TRPs or multiple TRP groups correspond to two sets of unified TCI states.

In this case, since the terminal does not support dynamic switching between CJT and S-TRP communication schemes, only CJT communication is performed for the terminal. In other words, the terminal does not use S-TRP communication. Therefore, the terminal defaults to determining at least two sets of unified TCI states of the N sets of unified TCI states to satisfy the terminal for CJT communication.

In some embodiments, when the terminal supports dynamic switching between the designated scheme and the S-TRP communication scheme, a set of unified TCI states among the N sets of unified TCI states is determined as the TCI state corresponding to the PDSCH and/or the DMRS corresponding to the PDSCH.

For example, when the terminal supports dynamic switching between CJT and S-TRP communication schemes, the terminal determines one set of unified TCI states from the N sets of unified TCI states and determines the set of unified TCI states as the TCI state corresponding to the PDSCH and/or the DMRS corresponding to the PDSCH.

It is understandable that when the terminal supports dynamic switching between CJT and S-TRP communication schemes, that is, the terminal needs to be able to communicate based on the M-TRP communication scheme or the S-TRP communication scheme. In this case, the network device can use one TRP or one TRP group by default to send PDSCH and/or DMRS corresponding to PDSCH to the terminal. Then this TRP or one TRP group corresponds to one set of unified TCI states. For example, a set of unified TCI states for receiving PDSCH and/or DMRS corresponding to PDSCH includes a joint TCI state, or a downlink TCI state.

For example, when N is 2 and the terminal supports dynamic switching between CJT and S-TRP communication schemes, the terminal determines the first or second set of unified TCI states among the N sets of unified TCI states and determines the first or second set of unified TCI states as the TCI state corresponding to the PDSCH and/or the DMRS corresponding to the PDSCH.

In this case, since the terminal supports dynamic switching between CJT and S-TRP communication schemes, S-TRP communication can be used by default. That is, the terminal and the network device can determine one set of unified TCI states of the N sets of unified TCI states by default. In this case, if the terminal switches to CJT communication, multiple TCI states can be indicated based on the DCI sent by the network device to achieve dynamic switching between CJT and S-TRP communication schemes.

It can be understood that in the above embodiments, the CJT can be CJT using M-TRP communication. Although there is a situation where a CMR under CJT includes only one NZP CSI-RS resource. However, in this case, the CJT is CJT using S-TRP communication. For the CJT using S-TRP communication, there is no need to implement dynamic switching with the S-TRP, because the CJT using S-TRP communication is itself an S-TRP communication scheme, so there is no need to switch. Therefore, when the terminal dynamically switches between the CJT and the S-TRP communication schemes, the CJT is usually CJT using M-TRP communication.

This disclosure provides various methods for determining, under different configuration schemes, at least one set of TCI states from multiple sets of TCI states. This allows for communication using the determined at least one set of TCI states. This improves the flexibility of data transmission based on a unified TCI state, thereby enhancing the performance of data transmission and/or reception.

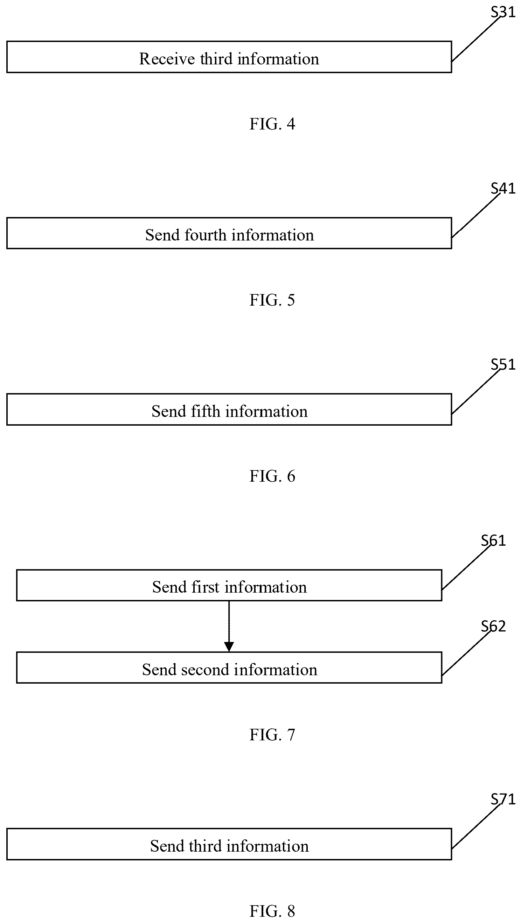

In the TCI state determination method provided in the embodiments of the present disclosure, FIG. 4 is a flow chart of another TCI state determination method according to an exemplary embodiment. As shown in FIG. 4, the method may further include the following steps:
In step S31, third information is received.

In some embodiments, the terminal may receive third information, where the third information is used to configure a CMR.

Of course, possible implementations of S31 can refer to the descriptions of the various embodiments in S21, and this disclosure will not go into details here.

In some embodiments, if the terminal does not support dynamic switching between the designated scheme and the S-TRP communication scheme, the number of NZP CSI-RS resources selected by the terminal from multiple NZP CSI-RS resources is greater than 1, and the CMR includes multiple NZP CSI-RS resources. The designated scheme adopts M-TRP communication.

For example, the terminal does not support dynamic switching between the designated scheme and the S-TRP communication scheme, that is, the terminal cannot implement dynamic switching between the designated scheme and the S-TRP communication scheme. In the case where the terminal does not support dynamic switching between the designated scheme and the S-TRP communication scheme, the terminal can determine at least two sets of unified TCI states among the N sets of unified TCI states. In other words, the terminal determines multiple sets of unified TCI states. For a designated scheme using M-TRP communication, multiple sets of TCI states correspond to multiple TRPs or multiple TRP groups, and generally one TRP or one TRP group corresponds to one NZP CSI-RS resource. Therefore, the number of NZP CSI-RS resources selected by the terminal from multiple NZP CSI-RS resources needs to be greater than 1. In addition, a corresponding CMR needs to include multiple NZP CSI-RSs.

The present disclosure can determine that the terminal selects multiple NZP CSI-RSs under the designated scheme when the terminal does not support dynamic switching between the designated scheme and the S-TRP. In this case, communication is performed using the determined at least one set of TCI states. This improves the flexibility of data transmission based on the unified TCI state, thereby improving data transmission and/or reception performance.

In the TCI state determination method provided in the embodiment of the present disclosure, FIG. 5 is a flow chart of another TCI state determination method according to an exemplary embodiment. As shown in FIG. 5, the method may further include the following steps:
In step S41, the fourth information is sent.

In some embodiments, the terminal may send fourth information. The fourth information is used to indicate whether the terminal supports the capability of dynamically switching between the designated scheme and the S-TRP communication scheme.

For example, the terminal may send fourth information to the network device. The fourth information is used to indicate whether the terminal supports the capability of dynamically switching between the designated scheme and the S-TRP communication scheme. It can be understood that by sending the fourth information to the network device, the terminal informs the network device whether the terminal supports the capability of dynamically switching between the designated scheme and the S-TRP communication scheme.

The present disclosure can also report to the network device whether the terminal supports dynamic switching between a designated scheme and the S-TRP communication scheme. This allows the terminal to determine whether to use at least one set of TCI states of the indicated multiple sets of TCI states for communication when the designated scheme is configured. This improves the flexibility of data transmission based on a unified TCI state, thereby enhancing the performance of data transmission and/or reception.

In the TCI state determination method provided by the embodiment of the present disclosure, the designated scheme is CJT.

In some embodiments, the PDSCH and/or the DMRS corresponding to the PDSCH are configured to communicate using the designated scheme, and may be configured to communicate using CJT.

The CJT can represent the use of multiple TRPs for joint transmission.

The present disclosure determines to use at least one set of TCI states among indicated multiple sets of TCI states for communication when CJT communication is used, thereby improving the flexibility of data transmission based on a unified TCI state and thereby improving the performance of data transmission and/or reception.

In the TCI state determination method provided by the embodiment of the present disclosure, the CJT includes at least one of the following: a CMR configured by the network device includes L NZP CSI-RS resources, where L is a positive integer, and one NZP CSI-RS resource corresponds to one TRP or one TRP group; a spatial basis vector is independently fed back for each NZP CSI-RS resource; a frequency domain basis vector is independently fed back for each NZP CSI-RS resource; and the same frequency domain basis vector is fed back for each NZP CSI-RS resource.

In some embodiments, the designated scheme includes a CMR configured by the network device including L NZP CSI-RS resources, where L is a positive integer and one NZP CSI-RS resource corresponds to one TRP or one TRP group.

It can be understood that when L is 1, it means that a CMR includes only one NZP CSI-RS resource, that is, it corresponds to only one TRP or one TRP group. In this case, the designated scheme is S-TRP communication. When L is greater than 1, it means that a CMR includes only multiple NZP CSI-RS resources, that is, it corresponds to multiple TRPs or multiple TRP groups. In this case, the designated scheme is M-TRP communication.

Of course, in some other embodiments, the designated scheme includes at least one CMR among the multiple CMRs configured by the network device including L NZP CSI-RS resources.

For example, L can usually be 1, 2, 3, or 4. That is, a CMR usually includes 1-4 NZP CSI-RS resources.

For example, when L is equal to 1, the terminal may not need to select an NZP CSI-RS resource. The network device can directly use the channel corresponding to the one NZP CSI-RS resource to perform with the terminal the communication of the PDSCH and/or the DMRS corresponding to the PDSCH. The terminal only needs to provide CSI feedback for the one NZP CSI-RS resource.

For another example, when L is greater than 1, and the network device has configured corresponding restrictions. For example, the network device is configured to indicate that the terminal does not need to make a selection. In this case, the terminal does not need to select one or more NZP CSI-RS resources from multiple NZP CSI-RS resources. The network device will use the channels corresponding to the L NZP CSI-RS resources to perform with the terminal the communication of the PDSCH and/or DMRS corresponding to the PDSCH. The terminal only needs to provide CSI feedback for these L NZP CSI-RS resources.

For another example, when L is greater than 1, and the network device has not configured any restriction. The terminal can select one or more NZP CSI-RS resources from the L NZP CSI-RS resources. For example, the terminal selects K NZP CSI-RS resources from the L NZP CSI-RS resources. It can be understood that K is a positive integer, and K is less than or equal to L. The terminal needs to send an indication message to the network device to inform the network device which K NZP CSI-RS resources the terminal has selected. The network device can perform with the terminal the communication of the PDSCH and/or DMRS corresponding to the PDSCH based on the channel corresponding to the K NZP CSI-RS resources. The terminal only needs to provide CSI feedback for the K NZP CSI-RS resources.

It can be understood that when a CMR configured by the network device includes L NZP CSI-RS resources, it can be considered that the terminal adopts CJT communication.

In some embodiments, the designated scheme includes independently feeding back a spatial basis vector for each NZP CSI-RS resource.

For example, the terminal independently feeds back a spatial domain (SD) basis vector for each NZP CSI-RS resource. In other words, the terminal selects a specified number, H, of beams from the total number of CSI-RS ports, N1*N2. H is a positive integer. N1 represents the number of ports in the first dimension, and N2 represents the number of ports in the second dimension.

It can be understood that when the terminal independently feeds back a spatial basis vector for each NZP CSI-RS resource, it can be considered that the terminal adopts CJT communication.

In some embodiments, the designated scheme includes independently feeding back a frequency domain basis vector for each NZP CSI-RS resource.

For example, the terminal independently feeds back a frequency domain (FD) basis vector for each NZP CSI-RS resource. Specifically, for each NZP CSI-RS resource, the terminal selects v frequency domain basis vectors from the N3 frequency domain basis vectors. Here, v is a positive integer, and N3 represents the product of the number of channel quality indicator (CQI) subbands and the number of precoding matrix indicator (PMI) subbands.

It can be understood that when the terminal independently feeds back the frequency domain basis vector for each NZP CSI-RS resource, it can be considered that the terminal adopts CJT communication.

In some embodiments, the designated scheme includes feeding back the same frequency domain basis vector for each NZP CSI-RS resource.

For example, the terminal selects the same v frequency domain basis vectors from N3 frequency domain basis vectors for each NZP CSI-RS resource.

It can be understood that when the terminal feeds back the same frequency domain basis vector for each NZP CSI-RS resource, it can be considered that the terminal adopts CJT communication.

In some embodiments, the designated scheme includes configuring a network device with multiple TRPs or multiple TRP groups. It can be understood that each TRP or each TRP group corresponds to one NZP CSI-RS resource.

It can be understood that when a network device configures multiple TRPs or multiple TRP groups, it can be considered that the terminal uses CJT communication.

This disclosure provides multiple possible scenarios for the designated scheme. This allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the first information is carried by the first MAC CE, and the N sets of unified TCI states indicated by the first MAC CE correspond to a code point in the TCI state indication field carried in the DCI.

In some embodiments, the first information is carried by the first MAC CE. The first MAC CE may indicate N sets of unified TCI states. The N sets of unified TCI states indicated by the MAC CE may correspond to a code point in a TCI state indication field carried in the DCI.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the first information is carried by a second MAC CE and a DCI. The second MAC CE is used to indicate N sets of unified TCI states corresponding to each code point in the multiple code points corresponding to the TCI state indication field carried in the DCI. The TCI state indication field carried in the DCI is used to indicate one code point among the multiple code points.

In some embodiments, the first information is carried via the second MAC CE and the DCI. The second MAC CE may indicate N sets of unified TCI states corresponding to each of a plurality of code points. The plurality of code points may be multiple code points that may exist in a TCI state indication field carried in the DCI. The TCI state indication field carried in the DCI may indicate one of the plurality of code points, thereby indicating the N sets of unified TCI states corresponding to the code point.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the second information is carried through radio resource control (RRC) signaling; and/or the second information is carried through a third MAC CE.

In some embodiments, the second information is carried via RRC signaling.

For example, the terminal receives RRC signaling, where the RRC signaling is used to determine that the PDSCH and/or the DMRS corresponding to the PDSCH are configured to communicate using a designated scheme.

In some embodiments, the second information is carried by a third MAC CE.

For example, the terminal receives a third MAC CE, where the third MAC CE is used to determine that the PDSCH and/or the DMRS corresponding to the PDSCH is configured to use a designated scheme for communication.

In some embodiments, the second information is carried through the RRC signaling and the third MAC CE.

This disclosure provides a possible implementation of the second information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the unified TCI state includes at least one of the following: a joint TCI state; and at least one of a downlink TCI state and an uplink TCI state.

In some embodiments, the unified TCI state includes a joint TCI state.

The joint TCI state can be used for both DL communication and UL communication.

In some embodiments, the unified TCI state includes a downlink TCI state.

In some embodiments, the unified TCI state includes an uplink TCI state.

Of course, it should be understood that, in the case where the terminal receives the PDSCH and/or the DMRS corresponding to the PDSCH, the unified TCI state cannot only include the uplink TCI state.

In some embodiments, the unified TCI state includes a downlink TCI state and an uplink TCI state.

This disclosure provides multiple representations of the unified TCI state, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided in the embodiment of the present disclosure, FIG. 6 is a flow chart of another TCI state determination method according to an exemplary embodiment. As shown in FIG. 6, the method may further include the following steps:
In step S51, fifth information is sent.

In some embodiments, when a terminal selects at least one set of TCI states from the N sets of unified TCI states, that is, the terminal correspondingly selects at least one NZP CSI-RS resource from the multiple NZP CSI-RS resources. The terminal may send fifth information indicating the NZP CSI-RS resource selected by the terminal, thereby informing the network device of the selected NZP CSI-RS resources.

For example, when the terminal selects at least one set of TCI states from the N sets of unified TCI states, it means that the terminal has selected one NZP CSI-RS resource or at least two NZP CSI-RS resources from multiple NZP CSI-RS resources. The terminal may send fifth information to the network device to inform the network device which NZP CSI-RS resource the terminal has selected, or to inform the network device which at least two NZP CSI-RS resources the terminal has selected. The network device can determine the corresponding TRP based on the NZP CSI-RS resource selected by the terminal and communicate with the terminal.

The terminal of the present disclosure can also report the selected NZP CSI-RS resource to the network device, which allows for determining to use at least one set of TCI states among indicated multiple sets of TCI states for communication when a designated scheme is configured. This improves the flexibility of data transmission based on a unified TCI state, thereby enhancing data transmission and/or reception performance.

Based on the same concept, the present disclosure also provides a TCI state determination method performed by a network device.

FIG. 7 is a flow chart showing another method for determining a TCI state according to an exemplary embodiment. As shown in FIG. 7, the method is executed by a network device and may include the following steps:
In step S61, first information is sent.

In some embodiments, the network device may send first information, where the first information is used to determine N sets of unified TCI states, where N is a positive integer.

For example, the network device may send first information to the terminal. The first information is used to determine N sets of unified TCI states. For example, the first information may indicate N sets of unified TCI states. Alternatively, the first information may indicate one of multiple code points, and N sets of unified TCI states corresponding to each code point among the multiple code points may be configured through a MAC CE. Accordingly, the terminal determines the N sets of unified TCI states corresponding to the code point indicated by the first information.

In some embodiments, N may be 2.

In some embodiments, the first information is used to determine one set of unified TCI states. In other embodiments, the first information is used to determine multiple sets of unified TCI states.

In some embodiments, one piece of first information may be configured to determine N sets of unified TCI states.

Of course, in other embodiments, multiple pieces of first information may be configured to determine N sets of unified TCI states. For example, when N is 5, first information 1 may be configured to determine four sets of unified TCI states, and first information 2 may be configured to determine one set of unified TCI states. Thus, five sets of unified TCI states can be determined using first information 1 and first information 2.

For example, when N is 2, first information 1 can be configured to determine two sets of unified TCI states, including a first set and a second set, and first information 2 can be configured to determine the updated first set of unified TCI states. This allows two sets of unified TCI states to be determined using first information 1 and first information 2: the updated first set of unified TCI states and the unchanged second set of unified TCI states.

In step S62, second information is sent.

In some embodiments, the network device may send second information, where the second information is used to determine whether the PDSCH and/or the DMRS corresponding to the PDSCH is configured to use a designated scheme for communication.

For example, the network device may send second information to the terminal, where the second information is used to determine that the PDSCH and/or the DMRS corresponding to the PDSCH are configured to use a designated scheme for communication.

In some embodiments, the designated scheme may be a CJT scheme.

In some embodiments, the network device can independently determine the TRP for communicating with the terminal and communicate with the terminal based on the TRP.

In some embodiments, the network device may receive information sent by the terminal, which indicates which NZP CSI-RS resources the terminal has selected, or can be considered as indicating which TRPs the terminal has selected. The network device may then communicate with the terminal based on the TRP selected by the terminal.

It can be understood that NZP CSI-RS resources have a one-to-one correspondence with TRP.

The present disclosure determines to use at least one set of TCI states among indicated multiple sets of TCI states for communication when configuring a designated scheme for communication, thereby improving the flexibility of data transmission based on a unified TCI state and thereby improving the performance of data transmission and/or reception.

In the TCI state determination method provided by the embodiment of the present disclosure, the PDSCH and/or the DMRS corresponding to the PDSCH are scheduled by downlink control information (DCI) format 1_0; or, the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or, the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

It can be understood that for various embodiments of how the PDSCH and/or the DMRS corresponding to the PDSCH are configured and scheduled, reference can be made to the description of the corresponding embodiments on the terminal side and their associated embodiments, and this disclosure will not elaborate on them here.

This disclosure provides possible scenarios for configuring and scheduling the PDSCH and/or the DMRS corresponding to the PDSCH, to be applied to determine, under different configuration schemes, at least one set of TCI states from multiple indicated sets of TCI states for communication. This improves the flexibility of data transmission based on a unified TCI state, thereby enhancing the performance of data transmission and/or reception.

In the TCI state determination method provided in the embodiment of the present disclosure, FIG. 8 is a flow chart of another TCI state determination method according to an exemplary embodiment. As shown in FIG. 8, the method may further include the following steps:
In step S71, third information is sent.

In some embodiments, the network device may send third information. The third information is used to configure a CMR. Of course, in other embodiments, the third information may also be used to configure multiple CMRs.

For example, the network device sends third information to the terminal. The third information can be used to configure a CMR.

For another example, the network device sends third information to the terminal. The third information can be used to configure multiple CMRs.

In some embodiments, the CMR includes one NZP CSI-RS resource.

In some embodiments, the CMR includes multiple NZP CSI-RS resources, and the network device does not configure the terminal not to perform NZP CSI-RS resource selection.

In some embodiments, when the CMR includes multiple NZP CSI-RS resources and the network device does not configure the terminal not to perform NZP CSI-RS resource selection, the network device may configure the terminal to determine to selection one NZP CSI-RS resource among the multiple NZP CSI-RS resources

In some embodiments, when the CMR includes multiple NZP CSI-RS resources and the network device does not configure the terminal not to perform NZP CSI-RS resource selection, the network device may configure the terminal to determine to select at least two NZP CSI-RS resources among the multiple NZP CSI-RS resources.

In some embodiments, the CMR includes multiple NZP CSI-RS resources, and the network device configures the terminal not to perform NZP CSI-RS resource selection.

It can be understood that in the above embodiments, when the network device does not configure the terminal not to perform NZP CSI-RS resource selection, it means that the terminal can perform NZP CSI-RS resource selection. However, whether the terminal performs NZP CSI-RS resource selection can be based on the terminal's own situation, or can be instructed by the network device through signaling, which is not limited in this disclosure. Of course, the terminal's own situation can be whether the terminal's hardware device supports the terminal to perform NZP CSI-RS resource selection, or whether the current scenario supports the terminal to perform NZP CSI-RS resource selection, or whether the operator supports the terminal to perform NZP CSI-RS resource selection, etc. The terminal can determine according to the actual situation, which is not limited in this disclosure.

It can be understood that for the various embodiments in which the above-mentioned CMR includes one or more NZP CSI-RS resources, reference can be made to the description of the corresponding embodiments on the terminal side and their associated embodiments, and this disclosure will not go into details here.

The present disclosure provides multiple methods for determining at least one set of TCI states among multiple sets of TCI states when CMRs include different numbers of NZP CSI-RS resources. This allows communication to be performed using the determined at least one set of TCI states. This improves the flexibility of data transmission based on a unified TCI state, thereby enhancing data transmission and/or reception performance.

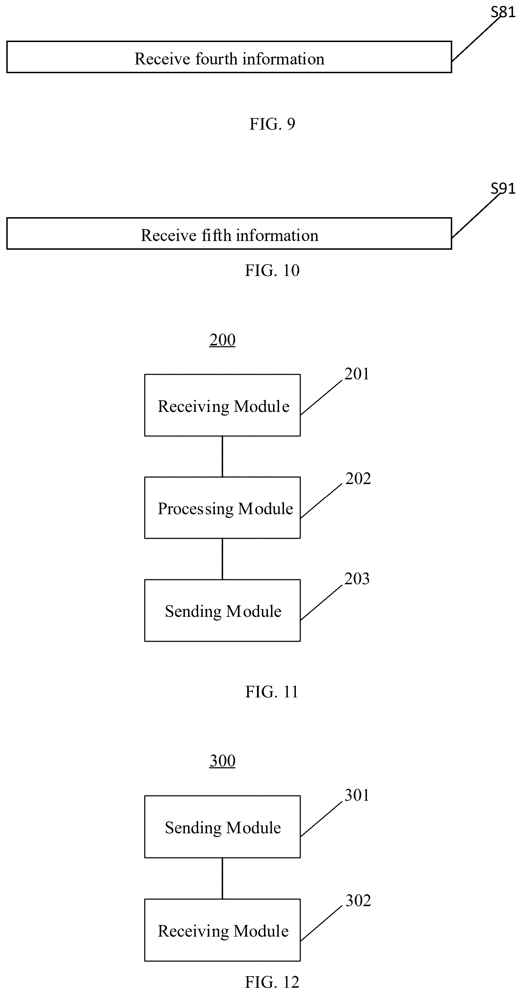

In the TCI state determination method provided in the embodiment of the present disclosure, FIG. 9 is a flow chart of another TCI state determination method according to an exemplary embodiment. As shown in FIG. 9, the method may further include the following steps:
In step S81, fourth information is received.

In some embodiments, the network device may receive fourth information. The fourth information is used to indicate whether the terminal supports the capability of dynamically switching between the designated scheme and the S-TRP communication scheme.

For example, the network device may receive fourth information sent by the terminal. The fourth information is used to indicate whether the terminal supports the ability to dynamically switch between the designated scheme and the S-TRP communication scheme. It can be understood that the terminal notifies the network device of whether the terminal supports the ability to dynamically switch between the designated scheme and the S-TRP communication scheme by sending the fourth information to the network device.

The network device of the present disclosure can also receive reports from terminals regarding support for dynamic switching between a designated scheme and the S-TRP communication scheme, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the designated scheme is CJT.

It can be understood that for each embodiment in which the designated scheme is CJT, reference can be made to the description of the respective embodiments of the terminal side where the designated scheme is CJT, and this disclosure will not go into details here.

The present disclosure determines to use at least one set of TCI states among multiple sets of TCI states indicated for communication when CJT is used, thereby improving the flexibility of data transmission based on a unified TCI state and thereby improving the performance of data transmission and/or reception.

In the TCI state determination method provided by the embodiment of the present disclosure, the CJT includes at least one of the following: a CMR configured by the network device includes L NZP CSI-RS resources, where L is a positive integer, and one NZP CSI-RS resource corresponds to one TRP or one TRP group; a spatial basis vector is independently fed back for each NZP CSI-RS resource; a frequency domain basis vector is independently fed back for each NZP CSI-RS resource; and the same frequency domain basis vector is fed back for each NZP CSI-RS resource.

It is understood that for each embodiment of the specified solution, reference can be made to the description of each embodiment of the specified solution on the terminal side and its associated embodiments, which will not be repeated here.

This disclosure provides multiple possible scenarios for the designated scheme. This allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the first information is carried by the first MAC CE, and the N sets of unified TCI state indicated by the first MAC CE correspond to a code point in the TCI state indication field carried in the DCI.

It can be understood that for each embodiment of the first information, reference can be made to the description of each embodiment of the specified solution on the terminal side and its associated embodiments, which will not be repeated here.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the first information is carried by a second MAC CE and a DCI. The second MAC CE is used to indicate N sets of unified TCI states corresponding to each code point in the multiple code points corresponding to the TCI state indication field carried in the DCI. The TCI state indication field carried in the DCI is used to indicate one code point among the multiple code points.

It can be understood that for each embodiment of the first information, reference can be made to the description of each embodiment of the specified solution on the terminal side and its associated embodiments, which will not be repeated here.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the second information is carried through RRC signaling; and/or, the second information is carried through a third MAC CE.

It can be understood that for various embodiments of the second information, reference can be made to the description of each embodiment of the specified solution on the terminal side and its associated embodiments, which will not be repeated here.

This disclosure provides a possible implementation of the second information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In the TCI state determination method provided by the embodiment of the present disclosure, the unified TCI state includes at least one of the following: a joint TCI state; and at least one of a downlink TCI state and an uplink TCI state.

It can be understood that for each embodiment of the unified TCI state, reference can be made to the description of each embodiment of the unified TCI state on the terminal side and its related embodiments, and this disclosure will not go into details here.

In the TCI state determination method provided in the embodiment of the present disclosure, FIG. 10 is a flow chart of another TCI state determination method according to an exemplary embodiment. As shown in FIG. 10, the method may further include the following steps:
In step S91, fifth information is received.

In some embodiments, when a terminal selects at least one set of TCI states from the N sets of unified TCI states, that is, the terminal correspondingly selects at least one NZP CSI-RS resource from the multiple NZP CSI-RS resources. The network device may receive fifth information sent by the terminal device, which is used to indicate the NZP CSI-RS resource selected by the terminal, thereby the network device may understand which NZP CSI-RS resources the terminal has selected.

For example, when the terminal selects at least one set of TCI states from the N sets of unified TCI states, it means that the terminal has selected one NZP CSI-RS resource or at least two NZP CSI-RS resources from multiple NZP CSI-RS resources. The terminal may send fifth information to the network device. The network device may receive the fifth information sent by the terminal, to determine which NZP CSI-RS resource the terminal has selected, or which at least two NZP CSI-RS resources the terminal has selected. The network device can determine the corresponding TRP based on the NZP CSI-RS resource selected by the terminal and communicate with the terminal.

The network device of the present disclosure can also receive the selected NZP CSI-RS resource reported by the terminal, which allows for determining to use at least one set of TCI states among indicated multiple sets of TCI states for communication when a designated scheme is configured. This improves the flexibility of data transmission based on a unified TCI state, thereby enhancing data transmission and/or reception performance.

This disclosure provides multiple representations of the unified TCI state, which allows for determining to use at least one set of TCI states among indicated multiple sets of TCI states for communication when a designated scheme is configured. This improves the flexibility of data transmission based on a unified TCI state, thereby enhancing data transmission and/or reception performance.

It should be noted, those skilled in the art will appreciate that the various implementation methods/embodiments involved in the embodiments of the present disclosure can be used in conjunction with the aforementioned embodiments or can be used independently. Whether used alone or in conjunction with the aforementioned embodiments, the implementation principles are similar. In the implementation of the present disclosure, some embodiments are described in terms of implementation methods used together. Of course, those skilled in the art will appreciate that such examples are not limitations on the embodiments of the present disclosure.

Based on the same concept, the embodiments of the present disclosure also provide a TCI state determination apparatus and device.

It is understandable that the TCI state determination apparatus and device provided by the embodiments of the present disclosure include hardware structures and/or software modules corresponding to the execution of each function in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art can use different methods to implement the described functions for each specific application, but such implementation should not be considered to exceed the scope of the technical solution of the embodiments of the present disclosure.

FIG. 11 is a schematic diagram of a TCI state determination apparatus according to an exemplary embodiment. Referring to FIG. 11, the apparatus 200 includes: a receiving module 201 configured to receive first information for determining N sets of unified TCI states, where N is a positive integer; the receiving module 201 is further configured to receive second information for determining whether a PDSCH and/or DMRS corresponding to the PDSCH is configured to communicate using a designated scheme; and a processing module 202 configured to determine the TCI state corresponding to the PDSCH and/or DMRS corresponding to the PDSCH as at least one set of unified TCI states of the N sets of unified TCI states.

The present disclosure determines to use at least one set of TCI states among multiple sets of TCI states indicated for communication when being configured with a designated scheme for communication, thereby improving the flexibility of data transmission based on a unified TCI state and thereby improving the performance of data transmission and/or reception.

In some embodiments, the TCI state corresponding to the PDSCH and/or the DMRS corresponding to the PDSCH is determined as the at least one set of unified TCI states of the N sets of unified TCI states when at least one of the following conditions is met: the PDSCH and/or the DMRS corresponding to the PDSCH are scheduled by DCI format 1_0; the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH adopts at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH is less than a time threshold, and the DCI format corresponding to the second DCI is DCI format 1_1 or DCI format 1_2.

This disclosure provides a variety of possible conditions for specifying conditions to be applied to determine, under different configuration schemes, at least one set of TCI states from multiple indicated sets of TCI states for communication. This improves the flexibility of data transmission based on a unified TCI state, thereby enhancing the performance of data transmission and/or reception.

In some embodiments, the receiving module 201 is further configure to receive third information, where the third information is used to configure a CMR; and the processing module 202 is further configured to: in a case where the CMR includes a non-zero power channel state information reference signal (NZP CSI-RS) resource, determine a set of unified TCI states among the N sets of unified TCI states as the TCI state corresponding to the PDSCH and/or the DMRS corresponding to the PDSCH; in a case where the CMR includes multiple NZP CSI-RS resources and one NZP CSI-RS resource of the multiple NZP CSI-RS resources is determined to be selected, determine a set of unified TCI states among the N sets of unified TCI states as the TCI state corresponding to the PDSCH and/or the DMRS corresponding to the PDSCH; in a case where the CMR includes multiple NZP CSI-RS resources and at least two NZP CSI-RS resources of the multiple NZP CSI-RS resources is determined to be selected, determine at least two sets of unified TCI states among the N sets of unified TCI states as the TCI state corresponding to the PDSCH and/or the DMRS corresponding to the PDSCH; in a case where the CMR includes multiple NZP CSI-RS resources and a network device configures the terminal not to perform NZP resource selection, determine at least two sets of unified TCI states among the N sets of unified TCI states as the TCI state corresponding to the PDSCH and/or the DMRS corresponding to the PDSCH.

The present disclosure provides various methods for determining at least one set of TCI states of multiple sets of TCI states under different configuration scenarios. This allows for communication using the determined at least one set of TCI states. This improves the flexibility of data transmission based on a unified TCI state, thereby enhancing data transmission and/or reception performance.

In some embodiments, the processing module 202 is further configured to: in a case where the terminal does not support dynamic switching between the designated scheme and a S-TRP communication scheme, determine at least two sets of unified TCI states among the N sets of unified TCI states as the TCI state corresponding to the PDSCH and/or the DMRS corresponding to the PDSCH, where the designated scheme adopts M-TRP communication; or in a case where the terminal supports dynamic switching between the designated scheme and the S-TRP communication scheme, determine one set of unified TCI states from the N sets of unified TCI states as the TCI state corresponding to the PDSCH and/or the DMRS corresponding to the PDSCH.

The present disclosure provides various methods for determining at least one set of TCI states of multiple sets of TCI states under different configuration scenarios. This allows for communication using the determined at least one set of TCI states. This improves the flexibility of data transmission based on a unified TCI state, thereby enhancing data transmission and/or reception performance.

In some embodiments, the receiving module 201 is further configured to: receive third information, where the third information is used to configure a CMR; in a case that the terminal does not support dynamic switching between the designated scheme and the S-TRP communication scheme, a number of NZP CSI-RS resources selected by the terminal from the multiple NZP CSI-RS resources is greater than 1, and the CMR includes the multiple NZP CSI-RS resources, where the designated scheme adopts M-TRP communication.

The present disclosure can determine that the terminal selects multiple NZP CSI-RSs under the designated scheme when the terminal does not support dynamic switching between the designated scheme and the S-TRP communication scheme. In this case, communication is performed using at least one set of TCI states. This improves the flexibility of data transmission based on a unified TCI state, thereby improving data transmission and/or reception performance.

In some embodiments, the apparatus 200 further includes: a sending module 203, configured to send fourth information, where the fourth information is used to indicate whether the terminal supports an ability to dynamically switch between the designated scheme and the S-TRP communication scheme.

The present disclosure can also report to the network device whether the terminal supports dynamic switching between a designated scheme and the S-TRP communication scheme. This allows the terminal to determine to use at least one set of TCI states of the indicated multiple sets of TCI states for communication when the designated scheme is configured. This improves the flexibility of data transmission based on a unified TCI state, thereby enhancing the performance of data transmission and/or reception.

In some embodiments, the designated scheme is coherent joint transmission (CJT).

The present disclosure determines to use at least one set of TCI states among multiple sets of TCI states indicated for communication when CJT is used, thereby improving the flexibility of data transmission based on a unified TCI state and thereby improving the performance of data transmission and/or reception.

In some embodiments, the CJT includes at least one of the following: one CMR configured by a network device includes L NZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

This disclosure provides multiple possible scenarios for the designated scheme. This allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the first information is carried by a MAC CE, and the N sets of unified TCI states indicated by the first MAC CE correspond to a code point in a TCI state indication field carried in the DCI.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the second information is carried via RRC signaling; and/or the second information is carried by a third MAC CE.

This disclosure provides a possible implementation of the second information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the unified TCI state includes at least one of the following: a joint TCI state; or at least one of a downlink TCI state and an uplink TCI state.

This disclosure provides multiple representations of the unified TCI state, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the sending module 203 is further configured to: send fifth information, where the fifth information is used to indicate the NZP CSI-RS resource selected by the terminal.

The terminal of the present disclosure can also report the selected NZP CSI-RS resource to the network device, which allows for determining to use at least one set of TCI states among indicated multiple sets of TCI states for communication when a designated scheme is configured. This improves the flexibility of data transmission based on a unified TCI state, thereby enhancing data transmission and/or reception performance.

FIG. 12 is a schematic diagram illustrating another apparatus for determining a TCI state, according to an exemplary embodiment. Referring to FIG. 12, the apparatus 300 includes a transmitting module 301 configured to transmit first information for determining N sets of unified TCI states, where N is a positive integer; and the sending module 301 is further configured to send second information for determining whether a PDSCH and/or DMRS corresponding to the PDSCH is configured to communicate using a designated scheme.

The present disclosure determines to use at least one set of TCI states among multiple sets of TCI states indicated for communication when being configured with a designated scheme for communication, thereby improving the flexibility of data transmission based on a unified TCI state and thereby improving the performance of data transmission and/or reception.

In some embodiments, the PDSCH and/or the DMRS corresponding to the PDSCH are scheduled by DCI format 1_0; or the PDSCH and/or the DMRS corresponding to the PDSCH are scheduled by a first DCI, where the first DCI does not include a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or the PDSCH and/or the DMRS corresponding to the PDSCH are scheduled by a second DCI, where the second DCI includes the first indication field, a time interval between the second DCI and the PDSCH and/or the DMRS corresponding to the PDSCH is less than a time threshold, and the DCI format corresponding to the second DCI is DCI format 1_1 or DCI format 1_2.

This disclosure provides a variety of possible conditions for specifying conditions to be applied to determine, under different configuration schemes, at least one set of TCI states from multiple indicated sets of TCI states for communication. This improves the flexibility of data transmission based on a unified TCI state, thereby enhancing the performance of data transmission and/or reception.

In some embodiments, the sending module 301 is further configured to: send third information, where the third information is used to configure a CMR; the CMR includes a NZP CSI-RS resource; the CMR includes multiple NZP CSI-RS resources, and the network device does not configure the terminal not to perform NZP CSI-RS resource selection; the CMR includes multiple NZP CSI-RS resources, and the network device configures the terminal not to perform NZP CSI-RS resource selection.

The present disclosure provides various methods for determining at least one set of TCI states of multiple sets of TCI states under different configuration scenarios. This allows for communication using the determined at least one set of TCI states. This improves the flexibility of data transmission based on a unified TCI state, thereby enhancing data transmission and/or reception performance.

In some embodiments, the apparatus 300 further includes: a receiving module 302, configured to receive fourth information, where the fourth information is used to indicate whether a terminal supports an ability to dynamically switch between a designated scheme and a S-TRP communication scheme.

The network device of the present disclosure can also receive reports from terminals regarding support for dynamic switching between a designated scheme and the S-TRP communication scheme, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the designated scheme is coherent joint transmission (CJT).

The present disclosure determines to use at least one set of TCI states among multiple sets of TCI states indicated for communication when CJT is used, thereby improving the flexibility of data transmission based on a unified TCI state and thereby improving the performance of data transmission and/or reception.

In some embodiments, the CJT includes at least one of the following: one CMR configured by the network device includes L NZP CSI-RS resources, where L is a positive integer and one NZP CSI-RS resource corresponds to one TRP or one TRP group; feeding back a spatial domain basis vector independently for each NZP CSI-RS resource; feeding back a frequency domain basis vector independently for each NZP CSI-RS resource; or feeding back a same frequency domain basis vector for each NZP CSI-RS resource.

This disclosure provides multiple possible scenarios for the designated scheme. This allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the first information is carried by a first MAC CE, and the N sets of unified TCI states indicated by the first MAC CE correspond to a code point in a TCI state indication field carried in the DCI.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

This disclosure provides a possible implementation of the first information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the second information is carried via RRC signaling; and/or the second information is carried by a third MAC CE.

This disclosure provides a possible implementation of the second information, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some embodiments, the unified TCI state includes at least one of the following: a joint TCI state; or at least one of a downlink TCI state and an uplink TCI state.

This disclosure provides multiple representations of the unified TCI state, which allows for determining to use at least one set of TCI states among indicated multiple sets of TCI states for communication when a designated scheme is configured. This improves the flexibility of data transmission based on a unified TCI state, thereby enhancing data transmission and/or reception performance.

In some implementations, the receiving module 302 is further configured to: receive fifth information, where the fifth information is used to indicate the NZP CSI-RS resource selected by the terminal.

The network device of the present disclosure can also receive the selected NZP CSI-RS resource reported by the terminal, which allows for determining to use at least one set of TCI states among indicated multiple sets of TCI states for communication when a designated scheme is configured. This improves the flexibility of data transmission based on a unified TCI state, thereby enhancing data transmission and/or reception performance.

It should be understood that the above-mentioned apparatus 300 may also include any possible modules such as a processing module, and the present disclosure does not limit this.

Regarding the apparatus in the above embodiment, the specific manner in which each module performs operations has been described in detail in the embodiment of the method, and will not be elaborated here.

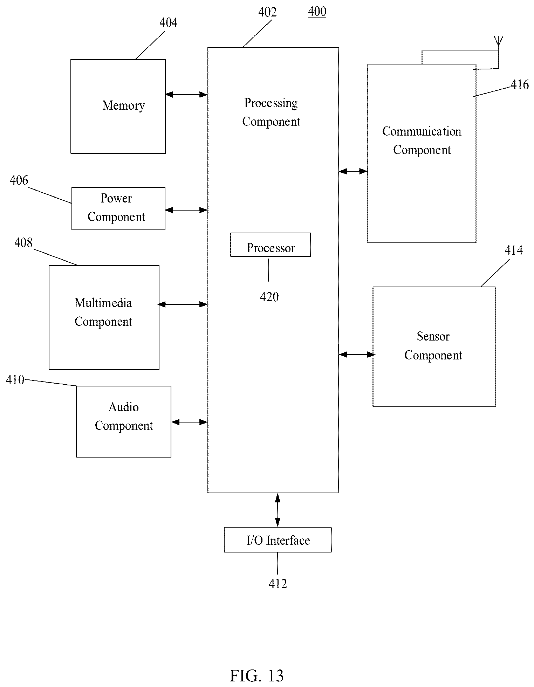

FIG. 13 is a schematic diagram of a TCI state determination device according to an exemplary embodiment. For example, the device 400 may be any terminal such as a mobile phone, a computer, a digital broadcast terminal, a messaging device, a game console, a tablet device, a medical device, a fitness device, a personal digital assistant, or the like.

Referring to FIG. 13, the device 400 may include one or more of the following components: a processing component 402, a memory 404, a power component 406, a multimedia component 408, an audio component 410, an input/output (I/O) interface 412, a sensor component 414, and a communication component 416.

The processing component 402 generally controls the overall operations of the device 400, such as operations associated with display, telephone calls, data communications, camera operations, and recording operations. The processing component 402 may include one or more processors 420 to execute instructions to complete all or part of the steps of the above method. Additionally, processing component 402 may include one or more modules that facilitate interaction between processing component 402 and other components. For example, processing component 402 may include a multimedia module to facilitate interaction between multimedia component 408 and processing component 402.

The memory 404 is configured to store various types of data to support operations at the device 400. Examples of such data include instructions for any application or method operating on the device 400, contact data, phonebook data, messages, pictures, videos, etc. The memory 404 can be realized by any type of volatile or non-volatile storage device or their combination, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk.

The power component 406 provides power to various components of the device 400. The power component 406 may include a power management system, one or more power supplies, and other components associated with generating, managing, and distributing power for device 400.

The multimedia component 408 includes a screen providing an output interface between the device 400 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 408 includes a front camera and/or a rear camera. When the device 400 is in an operation mode, such as a photographing mode or a video mode, the front camera and/or the rear camera can receive external multimedia data. Each front camera and rear camera can be a fixed optical lens system or have focal length and optical zoom capability.

The audio component 410 is configured to output and/or input audio signals. For example, the audio component 410 includes a microphone (MIC), which is configured to receive an external audio signal when the device 400 is in an operation mode, such as a call mode, a recording mode and a voice recognition mode. Received audio signals may be further stored in memory 404 or sent via communication component 416. In some embodiments, the audio component 410 also includes a speaker for outputting audio signals.

The I/O interface 412 provides an interface between the processing component 402 and a peripheral interface module, which may be a keyboard, a click wheel, a button, and the like. These buttons may include, but are not limited to: a home button, volume buttons, start button, and lock button.

The sensor component 414 includes one or more sensors for providing device 400 with various aspects of status assessment. For example, the sensor component 414 can detect the open/closed state of the device 400, the relative positioning of components, such as the display and the keypad of the device 400, the sensor component 414 can also detect the device 400 or a change in the position of a component of the device 400, the presence or absence of user's contact with the device 400, the change of orientation or acceleration/deceleration of the device 400 and the temperature change of the device 400. The sensor component 414 may include a proximity sensor configured to detect the presence of nearby objects in the absence of any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor or a temperature sensor.

The communication component 416 is configured to facilitate wired or wireless communication between the device 400 and other devices. The device 400 can access a wireless network based on communication standards, such as Wi-Fi, 2G or 3G, or a combination thereof. In an exemplary embodiment, the communication component 416 receives broadcast signals or broadcast related information from an external broadcast management system via a broadcast channel. In an exemplary embodiment, the communication component 416 also includes a near field communication (NFC) module to facilitate short-range communication. For example, the NFC module can be implemented based on radio frequency identification (RFID) technology, infrared data association (IrDA) technology, ultra wideband (UWB) technology, bluetooth (BT) technology and other technologies.

In an exemplary embodiment, device 400 may be implemented by one or more application specific integrated circuits (ASIC), digital signal processors (DSP), digital signal processing devices (DSPD), programmable logic devices (PLD), field programmable gate array (FPGA), controllers, microcontrollers, microprocessors or other electronic components for performing the method described above.

In an exemplary embodiment, there is also provided a non-transitory computer-readable storage medium including instructions, such as the memory 404 including instructions, which can be executed by the processor 420 of the device 400 to implement the above method. For example, the non-transitory computer readable storage medium may be ROM, random access memory (RAM), CD-ROM, magnetic tape, floppy disk, and optical data storage device, and the like.

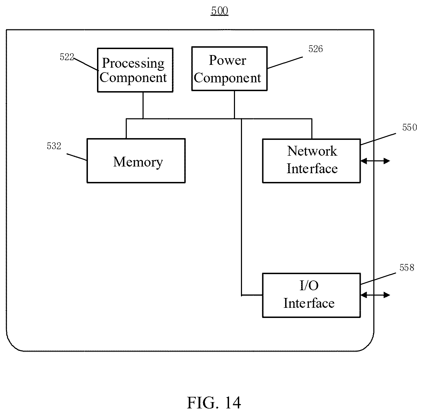

FIG. 14 is a schematic diagram of another TCI state determination device according to an exemplary embodiment. For example, device 500 may be provided as a base station or a server. Referring to FIG. 14, device 500 includes a processing component 522, which further includes one or more processors, and a memory resource represented by a memory 532 for storing instructions executable by the processing component 522, such as application programs. The application program stored in memory 532 may include one or more modules each corresponding to a set of instructions. In addition, the processing component 522 is configured to execute instructions, so as to perform any of the aforementioned methods.

The device 500 may also include a power component 526 configured to perform power management of the device 500, a wired or wireless network interface 550 configured to connect base station 500 to a network, and an input-output (I/O) interface 558. The device 500 can operate based on an operating system stored in the memory 532, such as Windows Server^{™}, Mac OS X^{™}, Unix^{™}, Linux^{™}, FreeBSD^{™} or the like.

This invention proposes a method for determining the TCI status of PDSCH-CJT transmission in the case of unified TCI state indication in S-DCI multi-TRP, and when indicating multiple sets of TCI states without explicit signaling indicating the corresponding one set or multiple sets of TCI states among the multiple sets of TCI states, thereby improving the transmission flexibility of PDSCH based on unified TCI status and enhancing PDSCH-CJT transmission performance.

It should be further understood that, in this disclosure, "multiple" refers to two or more, and other quantifiers are similar. "And/or" describes the relationship between related objects, indicating that three relationships can exist. For example, "A and/or B" can mean: A exists alone, A and B exist simultaneously, and B exists alone. The character "/" generally indicates that the related objects are in an "or" relationship. The singular forms "a", "the", and "this" are intended to include the plural forms unless the context clearly indicates otherwise.

It will be further understood that the terms "first," "second," and the like are used to describe various types of information, but such information should not be limited to these terms. These terms are used solely to distinguish information of the same type from one another and do not indicate a particular order or level of importance. In fact, the terms "first", "second", and the like are fully interchangeable. For example, first information could be referred to as second information, and similarly, second information could be referred to as first information without departing from the scope of this disclosure.

It is further understood that the meanings of words such as "in response to" and "if" involved in this disclosure depend on the context and the actual usage scenarios. For example, the word "in response to" used herein can be interpreted as "at..." or "when..." or "if" or "in case of".

It can be further understood that although operations are described in a particular order in the drawings in the embodiments of the present disclosure, this should not be construed as requiring that the operations be performed in the particular order shown or in a serial order, or that all of the operations shown be performed to obtain the desired results. In certain circumstances, multitasking and parallel processing may be advantageous.

Other embodiments of the disclosure will be readily apparent to those skilled in the art from consideration of the specification and practice of the invention disclosed herein. This application is intended to cover any modification, use or adaptation of the present disclosure, these modifications, uses or adaptations follow the general principles of the present disclosure and include common knowledge or conventional technical means in the technical field not disclosed in this disclosure.

It should be understood that the present disclosure is not limited to the precise constructions which have been described above and shown in the accompanying drawings, and various modifications and changes may be made without departing from the scope thereof. The scope of the disclosure is limited only by the appended claims.

## Claims

1. A method for determining a transmission configuration indication (TCI) state, wherein the method is performed by a terminal and comprises:
receiving first information, wherein the first information is used to determine N sets of unified TCI states, wherein N is a positive integer;
receiving second information, wherein the second information is used to determine whether a physical downlink shared channel (PDSCH) and/or a demodulation reference signal (DMRS) corresponding to the PDSCH is configured to adopt a designated scheme for communication; and
determining a TCI state corresponding to the PDSCH and/or the DMRS corresponding to the PDSCH as at least one set of unified TCI states of the N sets of unified TCI states.

2. The method according to claim 1, wherein the TCI state corresponding to the PDSCH and/or the DMRS corresponding to the PDSCH is determined as the at least one set of unified TCI states of the N sets of unified TCI states when at least one of the following conditions is met:
the PDSCH and/or the DMRS corresponding to the PDSCH are scheduled by downlink control information (DCI) format 1_0;
the PDSCH and/or the DMRS corresponding to the PDSCH are scheduled by a first DCI, wherein the first DCI does not comprise a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or
the PDSCH and/or the DMRS corresponding to the PDSCH are scheduled by a second DCI, wherein the second DCI comprises the first indication field, a time interval between the second DCI and the PDSCH and/or the DMRS corresponding to the PDSCH is less than a time threshold, and the DCI format corresponding to the second DCI is DCI format 1_1 or DCI format 1_2.

3. The method according to claim 1 or 2, further comprising:
receiving third information, wherein the third information is used to configure a channel measurement resource (CMR);
the determining the TCI state corresponding to the PDSCH and/or the DMRS corresponding to the PDSCH as at least one set of unified TCI states of the N sets of unified TCI states comprises:
in a case where the CMR comprises a non-zero power channel state information reference signal (NZP CSI-RS) resource, determining a set of unified TCI states among the N sets of unified TCI states as the TCI state corresponding to the PDSCH and/or the DMRS corresponding to the PDSCH;
in a case where the CMR comprises multiple NZP CSI-RS resources and one NZP CSI-RS resource of the multiple NZP CSI-RS resources is determined to be selected, determining a set of unified TCI states among the N sets of unified TCI states as the TCI state corresponding to the PDSCH and/or the DMRS corresponding to the PDSCH;
in a case where the CMR comprises multiple NZP CSI-RS resources and at least two NZP CSI-RS resources of the multiple NZP CSI-RS resources is determined to be selected, determining at least two sets of unified TCI states among the N sets of unified TCI states as the TCI state corresponding to the PDSCH and/or the DMRS corresponding to the PDSCH;
in a case where the CMR comprises multiple NZP CSI-RS resources and a network device configures the terminal not to perform NZP resource selection, determining at least two sets of unified TCI states among the N sets of unified TCI states as the TCI state corresponding to the PDSCH and/or the DMRS corresponding to the PDSCH.

4. The method according to claim 1 or 2, wherein determining the TCI state corresponding to the PDSCH and/or the DMRS corresponding to the PDSCH as at least one set of unified TCI states of the N sets of unified TCI states comprises:
in a case where the terminal does not support dynamic switching between the designated scheme and a single transmission and reception point (S-TRP) communication scheme, determining at least two sets of unified TCI states among the N sets of unified TCI states as the TCI state corresponding to the PDSCH and/or the DMRS corresponding to the PDSCH, wherein the designated scheme adopts multi transmission and reception point (M-TRP) communication; or
in a case where the terminal supports dynamic switching between the designated scheme and the S-TRP communication scheme, determining one set of unified TCI states from the N sets of unified TCI states as the TCI state corresponding to the PDSCH and/or the DMRS corresponding to the PDSCH.

5. The method according to claim 4, further comprising:
receiving third information, wherein the third information is used to configure a CMR;
in a case that the terminal does not support dynamic switching between the designated scheme and the S-TRP communication scheme, a number of NZP CSI-RS resources selected by the terminal from the multiple NZP CSI-RS resources is greater than 1, and the CMR comprises the multiple NZP CSI-RS resources, wherein the designated scheme adopts M-TRP communication.

6. The method according to claim 4 or 5, further comprising:
sending fourth information, wherein the fourth information is used to indicate whether the terminal supports an ability to dynamically switch between the designated scheme and the S-TRP communication scheme.

7. The method according to any one of claims 1 to 6, wherein the designated scheme is coherent joint transmission (CJT).

8. The method according to claim 7, wherein the CJT comprises at least one of the following:
one CMR configured by a network device comprises L NZP CSI-RS resources, wherein L is a positive integer and one NZP CSI-RS resource corresponds to one TRP or one TRP group;
feeding back a spatial domain basis vector independently for each NZP CSI-RS resource;
feeding back a frequency domain basis vector independently for each NZP CSI-RS resource; or
feeding back a same frequency domain basis vector for each NZP CSI-RS resource.

9. The method according to any one of claims 1 to 8, wherein the first information is carried by a first media access control unit (MAC CE), and the N sets of unified TCI states indicated by the first MAC CE correspond to a code point in a TCI state indication field carried in the DCI.

10. The method according to any one of claims 1 to 8, wherein the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

11. The method according to any one of claims 1 to 10, wherein the second information is carried via radio resource control (RRC) signaling; and/or
the second information is carried by a third MAC CE.

12. The method according to any one of claims 1 to 11, wherein the unified TCI state comprises at least one of the following:
a joint TCI state; or
at least one of a downlink TCI state and an uplink TCI state.

13. The method according to any one of claims 1 to 12, further comprising:
sending fifth information, wherein the fifth information is used to indicate the NZP CSI-RS resource selected by the terminal.

14. A method for determining a transmission configuration indication (TCI) state, wherein the method is performed by a network device and comprises:
sending first information, wherein the first information is used to determine N sets of unified TCI states, wherein N is a positive integer; and
sending second information, wherein the second information is used to determine whether a physical downlink shared channel (PDSCH) and/or a demodulation reference signal (DMRS) corresponding to the PDSCH is configured to adopt a designated scheme for communication.

15. The method according to claim 14, wherein the PDSCH and/or the DMRS corresponding to the PDSCH are scheduled by downlink control information (DCI) format 1_0; or
the PDSCH and/or the DMRS corresponding to the PDSCH are scheduled by a first DCI, wherein the first DCI does not comprise a first indication field, the DCI format corresponding to the first DCI is DCI format 1_1 or DCI format 1_2, and the first indication field is used to indicate that the PDSCH and/or the DMRS corresponding to the PDSCH adopt at least one set of unified TCI states of the N sets of unified TCI states; or
the PDSCH and/or the DMRS corresponding to the PDSCH are scheduled by a second DCI, wherein the second DCI comprises the first indication field, a time interval between the second DCI and the PDSCH and/or the DMRS corresponding to the PDSCH is less than a time threshold, and the DCI format corresponding to the second DCI is DCI format 1_1 or DCI format 1 2.

16. The method according to claim 14 or 15, further comprising:
sending third information, wherein the third information is used to configure a channel measurement resource (CMR);
the CMR comprises a non-zero power channel state information reference signal (NZP CSI-RS) resource;
the CMR comprises multiple NZP CSI-RS resources, and the network device does not configure the terminal not to perform NZP CSI-RS resource selection;
the CMR comprises multiple NZP CSI-RS resources, and the network device configures the terminal not to perform NZP CSI-RS resource selection.

17. The method according to any one of claims 14 to 16, further comprising:
receiving fourth information, wherein the fourth information is used to indicate whether a terminal supports an ability to dynamically switch between a designated scheme and a single-transmission-reception-point (S-TRP) communication scheme.

18. The method according to claim 17, wherein the designated scheme is coherent joint transmission (CJT).

19. The method according to claim 18, wherein the CJT comprises at least one of the following:
one CMR configured by the network device comprises L NZP CSI-RS resources, wherein L is a positive integer and one NZP CSI-RS resource corresponds to one TRP or one TRP group;
feeding back a spatial domain basis vector independently for each NZP CSI-RS resource;
feeding back a frequency domain basis vector independently for each NZP CSI-RS resource; or
feeding back a same frequency domain basis vector for each NZP CSI-RS resource.

20. The method according to any one of claims 14-19, wherein the first information is carried by a first media access control unit (MAC CE), and the N sets of unified TCI states indicated by the first MAC CE correspond to a code point in a TCI state indication field carried in the DCI.

21. The method according to any one of claims 14-19, wherein the first information is carried by a second MAC CE and a DCI, the second MAC CE is used to indicate N sets of unified TCI states corresponding respectively to each code point in a plurality of code points corresponding to a TCI state indication field carried in the DCI, and the TCI state indication field carried in the DCI is used to indicate one code point in the plurality of code points.

22. The method according to any one of claims 14 to 21, wherein the second information is carried via radio resource control (RRC) signaling; and/or
the second information is carried by a third MAC CE.

23. The method according to any one of claims 14 to 22, wherein the unified TCI state comprises at least one of the following:
a joint TCI state; or
at least one of a downlink TCI state and an uplink TCI state.

24. The method according to any one of claims 14 to 23, further comprising:
receiving fifth information, wherein the fifth information is used to indicate the NZP CSI-RS resource selected by a terminal.

25. An apparatus for determining a transmission configuration indication (TCI) state, comprising:
a receiving module, configured to receive first information, wherein the first information is used to determine N sets of unified TCI states, wherein N is a positive integer;
wherein the receiving module is further configured to receive second information, wherein the second information is used to determine whether a physical downlink shared channel (PDSCH) and/or a demodulation reference signal (DMRS) corresponding to the PDSCH is configured to adopt a designated scheme for communication; and
a processing module, configured to determine a TCI state corresponding to the PDSCH and/or the DMRS corresponding to the PDSCH as at least one set of unified TCI states of the N sets of unified TCI states.

26. An apparatus for determining a transmission configuration indication (TCI) state, comprising:
a sending module, configured to send first information, wherein the first information is used to determine N sets of unified TCI states, wherein N is a positive integer; and
wherein the sending module is further configured to send second information, wherein the second information is used to determine whether a physical downlink shared channel (PDSCH) and/or a demodulation reference signal (DMRS) corresponding to the PDSCH is configured to adopt a designated scheme for communication.

27. A device for determining a transmission configuration indication (TCI) state, comprising:
a processor; and
a memory for storing processor-executable instructions;
wherein the processor is configured to execute the method according to any one of claims 1 to 13.

28. A device for determining a transmission configuration indication (TCI) state, comprising:
a processor; and
a memory for storing processor-executable instructions;
wherein the processor is configured to execute the method according to any one of claims 14 to 24.

29. A non-transitory computer-readable storage medium, wherein when instructions in the storage medium are executed by a processor of a terminal, the terminal is enabled to perform the method according to any one of claims 1 to 13.

30. A non-transitory computer-readable storage medium, wherein when instructions in the storage medium are executed by a processor of a network device, the network device is enabled to perform the method according to any one of claims 14 to 24.
